# EUROPÄISCHE PATENTANMELDUNG

(11) **EP 4 312 002 A2**
(43) Veröffentlichungstag der Anmeldung: **31.01.2024**
(21) Anmeldenummer: 23182704.9
(22) Anmeldetag: 30.06.2023
(51) Int. Cl.: G01F 1/684, G01F 23/24, G01F 25/00, G01F 11/12

(54) **SAUGLANZE**

(30) Priorität: 07.07.2022 DE 102022117015
(71) Anmelder: Herbert Saier GmbH, 79194 Gundelfingen (DE)
(72) Erfinder: Saier, Michael, 79117 Freiburg/Kappel (DE)
(74) Vertreter: Roche, von Westernhagen & Ehresmann

(57) **Zusammenfassung**

Die Erfindung betrifft unter anderem eine Sauglanze (10) zur Entnahme eines flüssigen Mediums (12) aus einem Behältnis (11), umfassend einen Sauglanzenfußbereich (13), der insbesondere zum Aufsetzen auf einen Boden (15) des Behältnisses (11) ausgebildet ist, und einen Sauglanzenkopfbereich (14) zur Verbindung mit einer Dosiereinrichtung (16), dadurch gekennzeichnet, dass an der Sauglanze (10) wenigstens ein Heizelement (21) und wenigstens ein mit einer Messeinrichtung (23) verbindbarer oder verbundener Temperatursensor (22) angeordnet ist, wobei mittels der Messeinrichtung (23) unter Zuhilfenahme eines von dem Temperatursensor (22) ausgegebenen Messwertes
i)eine Information über eine vorgenommene Förderung des Mediums (12) durch die Sauglanze (10) hindurch ermittelbar ist und/ oder
ii) eine Information über einen Füllstand (24) an Medium (12) in dem Behältnis (11) ermittelbar ist.

## Beschreibung

Die Erfindung bezieht sich zunächst auf eine Sauglanze nach dem Oberbegriff des Anspruches 1.

Die Anmelder entwickeln und vertreiben über die mit ihnen verbundenen Unternehmen Herbert Saier GmbH und Saier Dosiertechnik GmbH Sauglanzen der gattungsgemäßen Art für Dosiereinrichtungen seit vielen Jahrzehnten. Bezüglich des Standes der Technik wird beispielsweise verwiesen auf die Druckschriften DE 10 2016 102 829 A1, DE 10 2017 114 767 A1, DE 10 2017 103 168 A1, DE10 2016 125 928 A1, DE 10 2017 114 665 A1, DE 10 2018 113 644 A1, DE 10 2011 119 021 A1, DE 10 2011 122 921 A1, DE 10 2012 012 913 A1, DE 10 2014 002 560 A1, DE 10 2014 010 126 A1, EP 2 966 299 A1, DE 10 2015 110 862 A1, EP 3 115 498 A1, DE 10 2015 107 105 A1, EP 3 091 114 A1 und DE 10 2015 107 976 A1, die sämtlich auf die Anmelder zurückgehen.

Sauglanzen der bekannten Art dienen dazu, in ein Gebinde, typischerweise in einen Kanister oder in eine Flasche oder in ein dergleichen ausgebildetes Behältnis, hineingesteckt zu werden, so dass der Fuß der Sauglanze auf dem Boden des Gefäßes aufliegt oder aufsitzt. Das andere Ende der Sauglanze, der Sauglanzenkopf, verfügt über einen Anschluss, mit dem die Sauglanze z. B. mit einer Dosiereinrichtung verbunden wird. Die Dosiereinrichtung kann unter Zuhilfenahme einer Pumpe ein flüssiges Medium bei Bedarf und in der gewünschten Menge aus dem Behältnis heraus saugen, und einem Zielbehältnis, z. B. einer Waschmaschine oder einer Geschirrspülmaschine, zukommen lassen.

Sauglanzen der gattungsgemäßen Art sind in der Regel nicht dazu ausgebildet, Informationen über den Füllstand des Behältnisses zu liefern. Dafür sind stattdessen an dem Behältnis häufig Messeinrichtungen vorgesehen, die den jeweils aktuellen Flüssigkeitsfüllstand als Information bereitstellen.

Den Anmeldern sind zwei Arten von Sauglanzen bekannt geworden, die zwar theoretisch Füllstandsinformationen liefern können, die sich aber beide aufgrund technischer Unzulänglichkeiten im Markt nicht durchgesetzt haben, bzw. in bestimmten Bereichen oder Anwendungen nicht einsetzbar sind, oder nicht universell einsetzbar sind.

Zum einen ist aus dem Stand der Technik eine Sauglanze bekannt, bei der ein Schwimmer vorgesehen ist, der oben auf der Flüssigkeit aufschwimmt, und gegen eine Anschlagfläche gedrückt wird. Fällt der Flüssigkeitsstand unter ein Mindestflüssigkeitsniveau, verlässt der Schwimmer die Anschlagfläche, wobei diese Situation durch einen Näherungsschalter oder durch einen Reed-Kontakt feststellbar ist. Ein Problem sind hier die bei Schwimmern erforderlichen großen Bauräume und auch die hohen Kosten.

Darüber hinaus sind im Stand der Technik Sauglanzen bekannt geworden, bei denen zwei metallische, konzentrisch zueinander angeordnete Rohre vorgesehen sind, zwischen denen eine Kapazität gemessen wird, wobei sich die gemessene Kapazität in Abhängigkeit des Füllstandes ändert. Eine diesbezügliche Messung ist allerdings relativ ungenau bzw. unzuverlässig.

Darüber hinaus sind von der Anmelderin Sauglanzen entwickelt worden, die in der DE 10 2018 106 045 A1 sowie in der DE 10 2020 106 712 A1 beschrieben sind. Hier werden andere Ansätze zur Ermittlung von Füllstandsinformationen verfolgt.

Ausgehend von einer druckschriftlich nicht belegbaren Sauglanze der Anmelder mit den Merkmalen des Oberbegriffes des Anspruches 1 besteht die Aufgabe der Erfindung darin, eine Sauglanze anzugeben, die eine verbesserte Handhabung ermöglicht.

Die Erfindung löst diese Aufgabe mit den Merkmalen des Anspruches 1.

Das Prinzip der Erfindung wird wie folgt kurz erläutert:
Gemäß einer ersten Variante der Erfindung sind Informationen über eine vorgenommene Förderung des Mediums durch die Sauglanze hindurch ermittelbar. Das Heizelement und der Temperatursensor sind bei dieser Variante als Bestandteil einer Durchflussmesseinrichtung, eines sogenannten Flowmeters, ausgebildet. Die Messeinrichtung kann von dem Temperatursensor einen Messwert aufnehmen und hieraus, mittelbar oder unmittelbar, Informationen über eine vorgenommene Förderung an Medium durch die Sauglanze hindurch ermitteln.

Gemäß einer zweiten Variante der Erfindung kann der von dem Temperatursensor ausgegebene Messwert eine Information über einen Füllstand an Medium in dem Behältnis umfassen. Hierbei ist vorgesehen, dass das Heizelement in Kombination mit dem Temperatursensor einen Messwert bereitstellen kann, der einen Schluss zulässt, ob ein bestimmter Füllstand an Medium in dem Behältnis besteht.

Gemäß der ersten Variante der Erfindung kann infolge einer durch Betrieb der Pumpe veranlassten Förderung des Mediums durch die Sauglanze hindurch festgestellt werden, dass mit dem Medientransport ein Wärmetransport einhergeht. Dieser nimmt einen Einfluss auf die durch den Temperatursensor zu messende Temperatur.

Gemäß der zweiten Variante der Erfindung kann der Temperatursensor feststellen, ob Medium oder Luft anliegt. Dies hängt mit unterschiedlichen Wärmekapazitäten einer Flüssigkeit einerseits und Luft andererseits zusammen. Diese unterschiedlichen Wärmekapazitäten des Umgebungsbereichs des Temperatursensors bzw. eines Umgebungsbereiches des Heizelementes erlauben einen Rückschluss auf einen Medientransport oder auf die Art des anstehenden Mediums (Flüssigkeit/ Luft) und damit die Ermittlung einer Füllstandsinformation.

Als Information über den Füllstand des Behältnisses wird im Sinne der Erfindung beispielsweise eine Information verstanden, dass das Behältnis vollständig entleert ist. Alternativ oder zusätzlich wird im Sinne der Erfindung darunter eine Information verstanden, dass das Behältnis noch gefüllt oder noch ausreichend gefüllt ist. Als Information über den Füllstand gemäß der Erfindung wird aber auch verstanden, dass damit eine Information ermittelbar ist, die darüber Auskunft gibt, dass der Inhalt des Behältnisses bald zur Neige geht. Schließlich wird als Information über den Füllstand des Behältnisses im Sinne der vorliegenden Patentanmeldung auch verstanden, wenn Informationen über den exakten Füllstand, z. B. eine bestimmte Prozentangabe des aktuellen Füllstandes bezogen auf den maximalen Füllstand, wie z. B. 10% gefüllt, 20% gefüllt etc., ermittelt wird.

Gemäß der Erfindung ist mit der Messeinrichtung zumindest eine Information über den Füllstand des Behältnisses ermittelbar. Diese Formulierung umfasst, dass bei Varianten der Erfindung mittels der Messeinrichtung auch noch zusätzliche Informationen, beispielsweise über die Art des Mediums, ermittelbar sein können.

Gemäß der Erfindung ist die Sauglanze insbesondere dazu vorgesehen, eine Flüssigkeit aus einem Gebinde zu einer Dosiereinrichtung zu fördern. Die erfindungsgemäße Sauglanze kann aber auch dazu dienen, unmittelbar an eine Pumpe oder eine andere Fördereinrichtung angeschlossen zu werden, die im Bereich des Sauglanzenanschlusses einen Saugdruck erzeugt, um Flüssigkeit durch die Sauglanze aus dem Gebinde herauszusaugen.

Der Sauglanzenanschluss ist gemäß der Erfindung vorteilhaft dazu ausgebildet, unmittelbar mit einer Dosiereinrichtung, z. B. mit einem Eingang einer Dosiereinrichtung, verbunden zu werden. Bei einer Variante der Erfindung kann der Sauglanzenanschluss auch unmittelbar mit einer Pumpe oder mit einem anderen Einlass einer Fördereinrichtung verbunden werden.

Gemäß einer vorteilhaften Variante der Erfindung umfasst die Sauglanze wenigstens einen elektrischen Leiter. Der elektrische Leiter verläuft zumindest teilweise innerhalb der Sauglanze. Der elektrische Leiter verbindet das Heizelement und/oder den Temperatursensor mit einem fern des Sauglanzenkopfes angeordneten elektrischen Anschluss. Der elektrische Leiter erstreckt sich insoweit bis nahe an den Sauglanzenanschluss heran. Das Ende des elektrischen Leiters, das distanziert von dem Sauglanzenfuß angeordnet sein kann, kann insbesondere als Steckverbinder ausgebildet sein, und mit einem Gegensteckverbinder kooperieren.

Vorteilhafterweise ist nicht nur ein elektrischer Leiter innerhalb der Sauglanze untergebracht, sondern es sind mehrere elektrische Leiter innerhalb der Sauglanze untergebracht.

Bei einer vorteilhaften Variante der Erfindung werden das Heizelement und der Temperatursensor mit Versorgungspannung versorgt, so dass einer bzw. mehrere Leiter erforderlich sind oder vorteilhaft sind. Darüber hinaus kann wenigstens ein elektrischer Leiter oder ein Paar elektrischer Leiter eine Signalleitung bereitstellen, wobei über die Signalleitung eine Information, insbesondere eine Füllstandsinformation übermittelbar ist.

Gemäß einer weiteren vorteilhaften Variante der Erfindung ist an der Sauglanze eine Leiterplatte mit elektronischen Bauelementen angeordnet. Insbesondere sind auf der Leiterplatte Bauelemente angeordnet, die eine Auswertung einer durchgeführten Messung ermöglichen. Damit wird es möglich, die Auswerteelektronik oder deren Bestandteile vollständig oder teilweise an der Sauglanze anzuordnen.

Gemäß einer weiteren vorteilhaften Variante der Erfindung sind dem Heizelement und/oder dem Temperatursensor elektrische Steckverbinder zugeordnet. Hierdurch wird einerseits die Möglichkeit bereitgestellt, die Messeinrichtung mit der erforderlichen Versorgungsspannung oder Betriebsspannung auf einfache Weise zu versorgen. Zum anderen können über die Steckverbinder an der Sauglanze auf einfache Weise Datenleitungen angeschlossen werden, um die Informationen an eine Steuerung, z. B. an eine Steuerung einer Dosiereinrichtung, zu übermitteln.

Schließlich kann die Sauglanze auch eine Einrichtung aufweisen, mit der das zur Neigegehen der Flüssigkeit oder ein erreichter Leerstand des Gebindes signalisiert wird. Eine Signalisierung kann beispielsweise als optisches oder akustisches oder datentechnisches Informationssignal vorgesehen sein.

Das Prinzip der Erfindung besteht im Wesentlichen darin, der Sauglanze wenigstens ein Heizelement und wenigstens einen Temperatursensor zuzuordnen. Das Heizelement kann das in der Sauglanze anstehende Medium mit Wärmeenergie beaufschlagen, und der wenigstens eine Temperatursensor kann - insbesondere distanziert von dem Heizelement angeordnet sein und - die dort anliegende Temperatur messen.

Für den Fall, dass die Pumpe nicht angetrieben ist, und das Medium, z. B. ein Spülmedium, demnach in der Sauglanze steht und keine Mediumförderung vorgenommen wird, kann in Abhängigkeit von der Ansteuerung des Heizelementes an dem Temperatursensor ein bestimmter Temperaturmesswert festgestellt oder gemessen werden.

Die Ansteuerung des Heizelementes kann insbesondere kontinuierlich oder getaktet oder auf Abruf oder bei Bedarf oder nach einem vorgegebenen Prinzip oder Schema erfolgen.

Wenn die Pumpe der Dosiereinrichtung angesprochen wird und Medium durch die Sauglanze gefördert wird, und mit der Förderung des Mediums ein Wärmetransport erfolgt, ändert sich die an dem Temperatursensor anliegende und messbare Temperatur. Eine Messeinrichtung kann diese Änderung des Temperaturmesswertes verarbeiten und auswerten und hieraus eine Information über eine vorgenommene Förderung des Mediums durch die Sauglanze hindurch ermitteln. Diese Information kann von der Messeinrichtung an die Steuereinheit der Dosiereinrichtung übermittelt werden. Infolge der Übermittlung der Information an die Steuereinheit kann die Steuereinheit unterschiedliche Bearbeitungsschritte durchführen.

Beispielsweise kann aus der von der Messeinrichtung übermittelten Information von der Steuereinheit ein Bezug zu der Art des geförderten Mediums oder ein Bezug zu der Fördermenge herausgearbeitet werden.

Diese Information kann von der Steuereinheit z. B. dazu verwendet werden, eine Kontrolle durchzuführen, ob das richtige Medium gefördert worden ist, oder eine Bestimmung vorzunehmen, welche Fördermenge an Medium gefördert worden ist, oder eine Kontrolle durchführen, ob die korrekte Fördermenge von der Pumpe gefördert worden ist.

Bei einer Ausgestaltung der Erfindung ist vorgesehen, dass wenigstens ein Heizelement und wenigstens zwei Temperatursensoren vorgesehen sind. Die Temperatursensoren sind insbesondere symmetrisch zu dem Heizelement angeordnet, wobei ein erster Temperatursensor stromabwärts und ein zweiter Temperatursensor stromaufwärts des Heizelementes angeordnet ist. Bei in der Sauglanze stehendem, nicht bewegtem Medium verteilt sich die von dem Heizelement in das Medium eingebrachte Wärmeenergie aufgrund der symmetrischen Anordnung der Temperatursensoren, eine symmetrische Bauform der Fluidleitung in der Sauglanze und der beteiligten Komponenten vorausgesetzt, gleichmäßig, so dass an beiden Temperatursensoren die gleiche oder im Wesentlichen die gleiche Temperatur gemessen wird. Bei dieser Anordnung besteht eine besonders einfache Möglichkeit einer Differenzmessung, so dass die erhaltenen Temperaturmesswerte, oder jedenfalls Messwerte, die mit der Temperatur im Zusammenhang stehen, z. B. Spannungen oder Ströme, voneinander subtrahiert werden können.

Eine solche Differenzmessung ist an sich im Stand der Technik in anderen Anwendungsbereichen bekannt und bietet besonders einfache Möglichkeiten einer Auswertung.

Solange das Medium steht, mithin die Pumpe nicht angesprochen wird, und keine Mediumförderung durch die Sauglanze hindurch stattfindet, ermittelt eine Differenzmessung einen Wert von Null oder nahezu von Null, da die beiden, von den Temperatursensoren abgegebenen Werte einander entsprechen oder einander im Wesentlichen entsprechen.

Sobald sich aber das Medium durch die Sauglanze hindurch bewegt, aufgrund des Ansprechens der Pumpe, und aufgrund der Mediumförderung durch die Sauglanze hindurch, misst der stromabwärts des Heizelementes angeordnete Temperatursensor zwangsläufig, aufgrund des mit dem Fluidstrom einhergehenden Wärmetransports, eine andere Temperatur als der stromaufwärts des Heizelementes angeordnete Temperatursensor.

Die Differenzmessung liefert sodann aussagekräftige, von Null verschiedene Werte.

Unter Anwendung eines analogen Mess- und Auswerteverfahrens kann eine Information über einen Fluidtransport auch erlangt werden, wenn nur ein einziger Temperatursensor vorgesehen ist. Auch hier kann in Folge eines Fluidstroms ein geänderter Messwert detektiert werden, bezogen auf eine Situation, in der das Medium in der Sauglanze steht.

Ein besonderer Vorteil der erfindungsgemäßen Sauglanze besteht darin, dass die vorgeschlagene Messanordnung keinerlei bewegliche Teile verwendet.

Aus dem Stand der Technik sind Flowmeter - allerdings nicht für Sauglanzen - bekannt, bei denen Flügelradzähler oder Ovalradzähler eingesetzt werden, um Fluidströme zu messen. Allerdings sind hier bewegliche Teile vorhanden, die insbesondere bei Verwendung unterschiedlicher Medien mit unterschiedlichen Viskositäten unpräzise Messwerte liefern und darüber hinaus hohen mechanischen Beanspruchungen ausgesetzt sind, so dass häufig Ausfälle zu verzeichnen sind. Die erfindungsgemäße Sauglanze ist aufgrund einer Anordnung von Heizelement und Temperatursensor völlig wartungsfrei.

Das erfindungsgemäße Messprinzip bietet zudem die Möglichkeit extrem kurzer Ansprechzeiten. Die Erfindung erkennt, dass, insbesondere bei einem Betrieb einer Dosiereinrichtung, die eine Schlauchpumpe einsetzt, und bei der auch nur geringe Dosiermengen gefördert werden, sehr exakte und schnelle Messungen und daraus resultierend sehr exakte Bestimmungen von Fördermengen erreichbar sind. Auch ermöglicht die erfindungsgemäße Sauglanze eine sehr exakte und sichere Bestimmung einer Medienart.

Hierzu kann insbesondere vorgesehen sein, dass die Messeinrichtung oder eine mit dieser kooperierende oder eine dieser nachgeschaltete Rechnereinheit, oder alternativ auch die Steuereinheit, eine Verarbeitung der erhaltenen Messwerte vornimmt, und aus der Signalform, z. B. aus der Signallänge, oder aus der Signalamplitude, oder aus dem Verhalten von Signalanstiegsflanken, oder von Signalabfallflanken, oder durch Frequenzanalysen oder Spektralanalysen, oder durch Prüfung oder Bestimmung von Periodizitäten, oder durch Prüfung von Signalmustern, von Verzögerungszeiten, von Phasenverzögerungen etc., sehr genaue Bestimmungen von Fördermengen für unterschiedliche Medien und unterschiedlichen Viskositäten sowie sehr genaue Bestimmungen unterschiedlicher Medienarten erreichbar sind.

Hierzu kann vorteilhafterweise der Steuereinheit der Dosiereinrichtung ein Speicher zugeordnet sein, in dem Werte für unterschiedliche Medien oder Werte für unterschiedliche Fördermengen oder für unterschiedliche Förderleistungen der Pumpe abgespeichert sind. Die Werte können z. B. Werte von unterschiedlichen Signalmustern, Signalformen, Signalarten, Signalanstiegsflanken, oder von Signalabfallflanken, Periodizitäten, Verzögerungszeiten, von Phasenverzögerungen, Signalamplituden und anderer Signaleigenschaften umfassen.

Die Steuereinheit kann unter Rückgriff auf den Speicher eine Beurteilung durchführen, z. B. einen Vergleich zwischen dem gemessenen Wert und dem im Speicher abgelegten Wert vornehmen und z. B. aufgrund dieser Beurteilung, z. B. aufgrund dieses Vergleiches, z. B. eine Bestimmung oder eine Kontrolle durchführen, welche Art von Medium gefördert worden ist und/oder welche Fördermenge eines bestimmten Mediums oder einer Medienart oder Mediumklasse gefördert worden ist.

Die erfindungsgemäße Sauglanze wird im Zusammenhang mit einer Dosiereinrichtung eingesetzt, die der Dosierung und Zuführung von Medien über eine Fluidleitung zu wenigstens einem Zielgerät dient.

Das Zielgerät kann beispielsweise von einer gewerblichen, textilen Waschmaschine oder von einer gewerblichen Geschirrspülmaschine bereitgestellt sein. Es kommen aber auch andere Zielgeräte in Betracht, denen regelmäßig oder unregelmäßig gleiche oder unterschiedliche, gegebenenfalls aufeinanderfolgende Medien, zugeführt werden müssen.

Die Dosiereinrichtung ist eingangsseitig mit wenigstens einem Behältnis verbunden, das mit einem Medium befüllt ist. Das Behältnis weist beispielsweise eine Zugangsöffnung für eine Sauglanze auf, die eine Schlauchleitung aufweist, die an die Dosiereinrichtung anschließbar ist.

Die Dosiereinrichtung kann eingangsseitig aber auch mit mehreren Behältnissen verbunden sein, die mit dem gleichen Medium oder mit unterschiedlichen Medien befüllt sind, und die jeweils über eine erfindungsgemäße Sauglanze angeschlossen sind. Insbesondere dient die erfindungsgemäße Dosiereinrichtung zum sukzessiven Zuführen unterschiedlicher Medien zu einem Zielgerät. Es wird hierzu beispielsweise verwiesen auf die EP 2 783 142 A2 der Anmelder, deren Inhalt hiermit in den Inhalt der vorliegenden Patentanmeldung mit eingeschlossen wird.

Die Dosiereinrichtung kann mit einer sogenannten Mischverteileinrichtung ausgestattet sein, die in der zuvor genannten Patentanmeldung beschrieben und offenbart ist. Eine solche Mischverteileinrichtung kann ein Stellglied aufweisen, das von der Steuereinheit ansprechbar ist und das unterschiedliche Kommunikationswege schaltet, so dass jeweils ein bestimmtes der mehreren Behältnisse mit dem Zielgerät verbindbar ist und auf diese Weise sukzessive unterschiedliche Medien dem Zielgerät zuführbar sind.

Wenigstens eines der Medien kann als Spülmittel ausgebildet sein, so dass jedes Mal nach Förderung eines Mediums ein Spülmedium gefördert werden kann, um die Leitungswege zu spülen.

Ein Medium im Sinne der vorliegenden Patentanmeldung ist ein flüssiges, z. B. hochkonzentriertes Mittel, das z. B. beim Waschen oder Reinigen von Gegenständen oder Textilien einsetzbar ist, z. B. ein Bestandteil eines Waschmittels, oder eine Chemikalie, die z. B. im Rahmen eines Wasch- der Reinigungsprozesses benötigt wird. Als Medium kommen jegliche Materialien in Betracht, wie sie z. B. in der EP2 783 142 A2 oder wie sie in einer der anderen, in Bezug genommenen Druckschriften beschrieben sind.

Die Dosiereinrichtung weist eine Steuereinheit auf. Es kann sich hierbei um eine Einrichtung handeln, die eine Rechnereinheit, z. B. einen Mikroprozessor, aufweist. Die Steuereinheit kann eine oder mehrere elektronische Komponenten aufweisen. Sie kann zentral oder dezentral organisiert sein.

Die Steuereinheit kann z. B. durch Aufforderung durch ein Zielgerät, z. B. nach Betätigung eines Programmwahlschalters an einem Zielgerät und Auswahl eines Wasch- oder Reinigungsprogramms, veranlassen, dass eine Pumpe angesprochen wird. Die Pumpe kann insbesondere eine Schlauchpumpe sein.

Durch Ansprechen der Pumpe kann eine vorbestimmte Menge an Medium aus dem Behältnis entnommen und zu dem Zielgerät hin gefördert werden.

Von der Erfindung sind auch Dosiereinrichtungen umfasst, die ausgangsseitig an mehrere Zielgeräte angeschlossen sein. Dabei kann insbesondere eine zweite Mischverteileinrichtung vorgesehen sein, die ein Stellglied umfasst, das die Kommunikationswege entsprechend schaltet.

Insbesondere kann während einer Durchführung eines Reinigungsprozesses an einem Zielgerät, zum Beispiel eines Waschprozesses in einer Waschmaschine, vorgesehen sein, dass das Zielgerät, zum Beispiel die Waschmaschine, zu unterschiedlichen Zeitpunkten im Rahmen des Waschprogramms von der Dosiereinrichtung unterschiedliche Medien in unterschiedlichen Mengen anfordert.

Die Dosiereinrichtung kann, für den Fall, dass eingangsseitig unterschiedliche Behältnisse angeschlossen sind, das Stellglied ansprechen, so dass der richtige Kommunikationsweg zu dem richtigen Behälter hergestellt wird, und sodann die Pumpe veranlassen, für eine vorbestimmte Zeitdauer oder eine vorbestimmte Zahl von Umdrehungen, eine vorbestimmte Menge an Medium zu dem Zielgerät zu fördern.

Mit dem erfindungsgemäß vorgesehenen Heizelement und dem Temperatursensor kann die Steuereinheit von der Messeinrichtung eine Information über eine vorgenommene Förderung des Mediums durch die - Sauglanze hindurch erlangen. Die Steuereinheit kann diese Information beispielsweise dazu verwenden, um zu überprüfen, ob das richtige Medium oder die richtige Medienart oder -klasse gefördert worden ist.

Die Steuereinheit kann die Information auch oder alternativ dazu verwenden, zu überprüfen, ob die richtige Fördermenge gefördert worden ist.

Die Erfindung ermöglicht auch eine Überprüfung dahingehend, ob an einem Zielgerät ein bestimmtes gefördertes Volumen an Medium angekommen ist. Ein solcher Prozess, der auch als POD (proof of delivery) bezeichnet wird, kann vorsehen, dass eingangsseitig oder jedenfalls stromaufwärts eines Zielgerätes, insbesondere eines jeden Zielgerätes, ein entsprechendes Heizelement und wenigstens ein Temperatursensor angeordnet ist, und eine Messeinrichtung, die entsprechende Informationen an die Steuereinheit übermittelt.

Alternativ und/oder zusätzlich kann auch eine Übermittlung dieser Information an ein Steuergerät des Zielgerätes erfolgen.

Bezüglich des Verständnisses der Erfindung und die Auslegung der verwendeten Begriffe wird verwiesen auf die weiteren Druckschriften der Anmelder, deren Inhalt hiermit in den Offenbarungsgehalt der vorliegenden Patentanmeldung mit eingeschlossen wird. Die technische Lehre gemäß der vorliegenden Patentanmeldung kann mit sämtlichen technischen Lehren der nachfolgend in Bezug genommenen Druckschriften kombiniert werden. Es handelt sich um die folgenden Druckschriften der Anmelder:
DE 10 2016 102 829 A1, DE 10 2017 114 767 A1, DE 10 2017 103 168 A1, DE 10 2016 125 928 A1, DE 10 2017 114 665 A1, DE 10 2018 113 644 A1, DE 10 2011 119 021 A1, DE 10 2011 122 921 A1, DE 10 2012 012 913 A1, DE 10 2014 002 560 A1, DE 10 2014 010 126 A1, EP 2 966 299 A1, DE 10 2015 110 862 A1, EP 3 115 498 A1, DE 10 2015 107 105 A1, EP 3 091 114 A1 und DE 10 2015 107 976 A1

Gemäß der Erfindung wird von der Messeinrichtung unter Zuhilfenahme eines von dem Temperatursensor ausgegebenen Messwertes eine Information über eine vorgenommene Förderung des Mediums durch die Sauglanze hindurch ermittelt. Der von dem Temperatursensor ausgegebene Messwert kann beispielsweise unmittelbar eine gemessene Temperatur umfassen, oder eine Messgröße, die zu einer Temperatur in einem Zusammenhang steht, z. B. eine gemessene Spannung, einen gemessenen Strom oder einen gemessenen Widerstand. Entscheidend ist, dass der Messwert mit dem an dem Temperatursensor anliegenden Temperaturwert in irgendeiner Weise korreliert.

Von der Formulierung, wonach der Messwert von einem Temperatursensor ausgegeben wird, ist umfasst, dass der Messwert von einem Temperatursensor unmittelbar oder mittelbar abgefragt wird oder von der Messeinrichtung auf andere Weise von dem Temperatursensor unmittelbar oder mittelbar erhalten wird.

Gemäß der Erfindung sind wenigstens ein Heizelement und wenigstens ein Temperatursensor vorgesehen. Diese Formulierung schließt Ausführungsformen ein, bei denen der Temperatursensor integral mit dem Heizelement ausgebildet ist, oder das Heizelement zugleich auch den Temperatursensor darstellt oder umfasst.

So kann beispielsweise ein Heizelement vorgesehen sein, das mit einer Steuerung für das Heizelement kooperiert, die für eine konstante Temperatur oder eine Soll-Temperatur des Heizelements sorgt, wobei aus der Art der Ansteuerung des Heizelementes, z. B. um die Temperatur konstant zu halten, ermittelbar ist, ob sich Medium innerhalb der Fluidleitung bewegt, und welche Fluidmengen gerade gefördert werden. So kann beispielsweise eine Heizungssteuerung für das Heizelement derartig ausgebildet sein, dass diese im Sinne einer Konstanttemperatur regelt, dass das Heizelement immer eine konstante Temperatur von z. B. 35°C aufweist. Solange das Medium in der Sauglanze steht und nicht gefördert wird, kann diese Temperatur, die höher als die Raumtemperatur ist, durch Zuführung von nur sehr wenig Heizenergie aufrechterhalten werden.

Wird die Pumpe angesprochen und das Medium durch die Sauglanze gefördert, muss erheblich mehr Heizenergie ausgewandt werden, um das Heizelement auf dieser Solltemperatur zu halten. Die Art und das Maß der Ansteuerung des Heizelementes kann also indirekt ebenfalls ein Maß für die Fluidförderung und die Menge der Fluidförderung sein, so dass die Messung der Art der Ansteuerung der Heizelementes indirekt auch eine Ausbildung eines Temperatursensors im Sinne der Erfindung bereitstellt.

Gemäß einer weiteren Variante der Erfindung kann das Heizelement gemeinsam mit dem Temperatursensor beispielsweise auch von einem integrierten Bauelement bereitgestellt werden. Dieses kann zum Beispiel einen temperaturabhängigen Widerstand umfassen.

Insbesondere kann ein solches Bauelement von einem NTC (Negative Temperature Coefficient)-Bauelement oder von einem PTC (Positive Temperature Coefficient)-Bauelement bereitgestellt sein oder ein solches Bauelement umfassen.

Weiter vorteilhaft kann ein solches elektronisches Bauelement mit einer Konstantstromquelle kooperieren. Die über das Bauelement abfallende Spannung kann gemessen werden und stellt ein Maß für den temperaturabhängigen Widerstand dar. Dieser Messwert ist damit auch ein Maß für dessen aktuelle Temperatur. Die aktuelle Temperatur des elektronischen Bauelementes ist davon abhängig, ob das Medium, das das Bauelement umgibt, steht oder fließt, und hängt beispielsweise auch von der Wärmekapazität des jeweiligen Mediums ab.

Aus einem Wert der über das elektronische Bauelement abfallenden Spannung bei Versorgung über eine Konstantstromquelle kann daher eine Information über eine Förderung von Medium ermittelt werden.

Als Pumpe einer Dosiereinrichtung im Sinne der Erfindung wird jede geeignete Art von Pumpe, z. B. eine Schlauchpumpe, Membranpumpe oder Kreiselpumpe, angesehen. Eine Pumpe im Sinne der Erfindung ist insbesondere eine Einrichtung, mit der ein Fluid, insbesondere eine Flüssigkeit, gefördert werden kann.

Von der Erfindung sind auch Sauglanzen für Dosiereinrichtungen mit Pumpen umfasst, die mit Saugprinzipien, z. B. nach dem Venturi-Prinzip, arbeiten. Hier wird z. B. durch Öffnen eines Ventils an einer Wasserleitung und z. B. durch Öffnen eines weiteren Ventils einer Medienleitung, die mit der Wasserleitung kommuniziert, in der Medienleitung zum Zweck einer Medienmitnahme ein Unterdruck erzeugt. Eine solche Pumpe bezeichnet man auch als Unterdruck-Pumpe, Saugpumpe, Venturi-Pumpe oder Venturidüse, Strahlpumpe oder Wasserstrahlpumpe.

Bezüglich der möglichen Anordnung und Ausbildungen und Funktionsweisen des Heizelementes und des Temperatursensors der Sauglanze gemäß der vorliegenden Erfindung wird auf die parallele deutsche nachveröffentlichte Patentanmeldung DE 10 2022 116 396.2 der Anmelder verwiesen, deren Inhalt hiermit in den Inhalt der vorliegenden Patentanmeldung mit eingeschlossen wird, dies explizit auch zu dem Zwecke, einzelne oder mehrere Merkmale aus dieser in Bezug genommenen Patentanmeldung in den Inhalt der der vorliegenden Patentanmeldung, auch in die Ansprüche der vorliegenden Patentanmeldung, bei Bedarf mit aufzunehmen. Soweit in dieser Anmeldung verschiedene Varianten und Ausführungsformen und Messprinzipien einer Baueinheit beschrieben sind, die wenigstens ein Heizelement und einen Temperatursensor umfassen, können die in der in Bezug genommenen Patentanmeldung offenbarten Merkmale auch im Zusammenhang mit der vorliegend beanspruchten Sauglanze vorgesehen werden.

Gemäß einer vorteilhaften Ausgestaltung der Erfindung ist vorgesehen, dass der Messwert auf einer gemessenen Temperatur basiert oder eine Temperatur, insbesondere eine gemessene Temperatur oder eine Temperaturänderung, berücksichtigt. Diese Ausführungsform ermöglicht eine besonders einfache Signalverarbeitung und eine schnelle Ansprechzeit.

Gemäß einer vorteilhaften Ausgestaltung der Erfindung ist vorgesehen, dass die Sauglanze ein Paar von Temperatursensoren umfasst. Diese Ausführungsform ermöglicht eine besonders gute Signalverarbeitung und eine einfache und präzise Messung, um festzustellen, dass eine Medienförderung eingetreten ist bzw. um zu bestimmen, welche Menge an Medium und welche Art von Medium gefördert worden ist.

Gemäß einer vorteilhaften Ausgestaltung der Erfindung ist vorgesehen, dass die beiden Temperatursensoren symmetrisch oder im Wesentlichen symmetrisch relativ zu dem Heizelement angeordnet sind. Dies ermöglicht eine besonders einfache Ausgestaltung einer Messeinrichtung und eine besonders elegante und präzise signaltechnische Verarbeitung der erlangten Messwerte.

Gemäß einer vorteilhaften Ausgestaltung der Erfindung ist vorgesehen, dass ein erster Temperatursensor stromaufwärts des Heizelementes und ein zweiter Temperatursensor stromabwärts des Heizelementes angeordnet ist. Dies ermöglicht eine besonders präzise signaltechnische Verarbeitung.

Gemäß einer vorteilhaften Ausgestaltung der Erfindung ist vorgesehen, dass mit der Messeinrichtung ein Vergleich der von den beiden Temperatursensoren ausgegebenen Werte durchführbar ist, insbesondere nach Art einer Differenzmessung, wobei mittels der Messeinrichtung aus dem Vergleich eine Information über eine vorgenommene Förderung des Mediums durch die Sauglanze hindurch ermittelbar und an die Steuereinheit übermittelbar ist. Diese Ausführungsform ermöglicht eine besonders einfache Signalverarbeitung und Signalauswertung. Dabei kann z. B. auf herkömmliche, in anderen Technikbereichen bekannt gewordene, Verfahren zur Verarbeitung von Differenzmesswerten zurückgegriffen werden.

Gemäß einer vorteilhaften Ausgestaltung der Erfindung ist vorgesehen, dass das Heizelement und der Temperatursensor oder das Paar von Temperatursensoren zu einer Baueinheit zusammengefasst sind. Dies ermöglicht einen Rückgriff auf kommerziell erhältliche Bauteile. Darüber hinaus wird eine besonders einfache Handhabung ermöglicht.

Gemäß einer vorteilhaften Ausgestaltung der Erfindung ist vorgesehen, dass die Baueinheit einen analogen Ausgang oder eine digitale Schnittstelle für einen Signalausgang aufweist. Die Ausführungsform kann vorsehen, dass der Baueinheit analoge Signalausgänge zugeordnet sind, so dass die Steuereinheit oder eine der Steuereinheit vorgeschaltete Elektronik - oder die Messeinrichtung - eine Verarbeitung dieser analogen Messwerte vornimmt. Alternativ kann vorgesehen sein, dass die Baueinheit eine digitale Schnittstelle, z. B. eine I²C-Schnittstelle aufweist.

Die letzte Variante bedingt z. B., dass in der Baueinheit bereits eine Rechnereinheit angeordnet ist, die eine signaltechnische Verarbeitung oder Signalvorverarbeitung der erhaltenen Messwerte vornimmt. Dabei kann beispielsweise vorgesehen sein, dass in der Baueinheit bereits eine Differenzmessung oder eine Vergleichsmessung vorgenommen wird. Insbesondere kann an der Baueinheit auch die Messeinrichtung angeordnet sein.

Alternativ kann die Baueinheit auch mit einer Messeinrichtung verbunden sein.

Auch kann vorgesehen sein, dass in der Baueinheit eine Signalverarbeitung vorgenommen wird.

Gemäß einer vorteilhaften Ausgestaltung der Erfindung ist vorgesehen, dass die Baueinheit eine Rechnereinheit aufweist. Diese Ausführungsform ermöglicht eine besonders vorteilhafte Systemarchitektur, so dass die Steuereinheit von Rechenschritten entlastet werden kann und eine Vorberechnung in der Baueinheit stattfindet.

Es ist für die Erfindung unmaßgeblich, ob ausschließlich sämtliche Rechen- und Bearbeitungsschritte durch die Steuereinheit der Dosiereinrichtung durchgeführt werden, oder sämtliche Rechenschritte durch eine Rechnereinheit der Baueinheit durchgeführt werden, oder ob sich diese beiden elektronischen Bauelemente, gegebenenfalls mit zusätzlichen elektronischen Baukomponenten, die Rechenarbeit, und/oder die Signalverarbeitungsarbeit, teilen.

Gemäß einer vorteilhaften Ausgestaltung der Erfindung ist vorgesehen, dass die Rechnereinheit mit der Steuereinheit verbunden ist. Diese Ausführungsform ermöglicht, dass eine sehr effiziente Signalverarbeitung vorgenommen werden kann.

Gemäß einer vorteilhaften Ausgestaltung der Erfindung ist vorgesehen, dass eine erste Baueinheit, insbesondere zur Messung einer Fördermenge, der Sauglanze zugeordnet ist, und dass wenigstens eine zweite Baueinheit einem Zielgerät zugeordnet ist. Diese Ausführungsform ermöglicht eine einfache Systemarchitektur zur Erzielung besonderer sicherer Dosierprozesse.

Diese Ausführungsform ermöglicht auf einfache Weise eine Bereitstellung und Gewährleistung eines proof-of-delivery = POD-Prinzips.

Gemäß einer vorteilhaften Ausgestaltung der Erfindung ist vorgesehen, dass die erste Baueinheit und die zweite Baueinheit mit der Steuereinheit der Dosiereinrichtung verbunden sind. Mit dieser Ausgestaltung der Erfindung wird eine Dosiereinrichtung bereitgestellt, mit der Dosierprozesse besonders sicher ausgestaltet sind.

Gemäß einer vorteilhaften Ausgestaltung der Erfindung ist vorgesehen, dass an die Dosiereinrichtung mehrere Zielgeräte angeschlossen sind, und jedem Zielgerät eine Baueinheit zugeordnet ist. Diese Ausführungsform trägt zur Erhöhung der Sicherheit bei Dosierprozessen bei.

Gemäß einer vorteilhaften Ausgestaltung der Erfindung ist vorgesehen, dass wenigstens eine Baueinheit zur Bereitstellung eines POD (= proof of delivery)-Signals ausgebildet ist. Hierdurch wird der Dosierprozess besonders sicher ausgestaltet. Das POD-Signal kann erfindungsgemäß von der Steuereinheit der Dosiereinrichtung verarbeitet werden und/oder von einem Steuergerät eines Zielgerätes. Insbesondere kann das POD-Signal zu Dokumentationszwecken weiterverarbeitet werden.

Gemäß einer vorteilhaften Ausgestaltung der Erfindung ist vorgesehen, dass das Heizelement und der Temperatursensor integraler Bestandteil der Sauglanze sind und/oder fest mit der Sauglanze verbunden sind. Diese Ausgestaltung ermöglicht eine besonders kompakte Bauweise der Sauglanze.

Gemäß einer vorteilhaften Ausgestaltung der Erfindung ist vorgesehen, dass die Information über eine vorgenommene Förderung einen Bezug zu einer Fördermenge des Mediums aufweist. Diese Ausgestaltung ermöglicht eine Bestimmung der Fördermenge, insbesondere unter Berücksichtigung weiterer Daten, die der Steuereinheit vorliegen. So kann die Steuereinheit beispielsweise aus den Ansprechzeiten der Pumpe, z. B. aus der an sich bekannten Zahl der Umdrehungen der Pumpe zur Förderung des Mediums oder aus der an sich bekannten Einschaltdauer der Pumpe, durch vergleichende Betrachtung prüfen, ob die Pumpe ordnungsgemäß funktioniert und die vorgesehene Fördermenge gefördert hat, oder ob eine Neukalibrierung oder Rekalibrierung der Pumpe erforderlich ist.

Insbesondere kann die Steuereinheit die erhaltenen Informationen in Bezug setzen zu einer der Steuereinheit an sich bereits bekannten Art des Mediums. Beispielsweise kann eine Dosiereinrichtung, die eingangsseitig einen Anschluss mehrerer Behältnisse zulässt, zuvor manuell oder automatisch eine Information darüber erlangt haben, welches Medium sich in welchem Behältnis befindet bzw. welches Medium gerade gefördert worden ist. Erhält die Dosiereinrichtung eine Information von der Messeinrichtung, die einen Bezug zu einer Fördermenge aufweist, kann die Steuereinheit unter Berücksichtigung der ohnehin schon vorhandenen Information über die Art des Mediums z. B. die Fördermenge dieses Mediums exakt bestimmen oder kontrollieren.

Gemäß einer vorteilhaften Ausgestaltung der Erfindung ist vorgesehen, dass die Information über eine vorgenommene Förderung einen Bezug zu einer Art des geförderten Mediums aufweist. Die Dosiereinrichtung kann auf diese Weise kontrollieren oder prüfen, ob das korrekte Medium gefördert worden ist.

Gemäß einer vorteilhaften Ausgestaltung der Erfindung ist vorgesehen, dass die Steuereinheit unabhängig von der Messeinrichtung eine als zweite Information bezeichnete Medieninformation über die Art des geförderten oder zu fördernden Mediums erhält. Die Steuereinheit kann beispielsweise eine Medieninformation über das geförderte oder zu fördernde Medium von einer Bedienperson erhalten, die z. B. beim Anschluss unterschiedlicher Behältnisse oder beim Befüllen unterschiedlicher Behältnisse an der Dosiereinrichtung eine Information an einer Schnittstelle eingibt, welches Medium an welchem Eingang der Dosiereinrichtung angeschlossen worden ist. Eine solche Informationseingabe kann freilich auch automatisiert, z. B. unter Zuhilfenahme der Sauglanzen, erfolgen.

Der Steuereinheit liegen damit auf unterschiedlichen Wegen zu ihr gelangte Informationen über das geförderte oder zu fördernde Medium vor: Eine erste Information über das Medium hat die Steuereinheit von der Messeinrichtung erhalten. Eine zweite Information hat die Steuereinheit von einem Benutzer oder automatisch beim Anschluss der Behältnisse oder der Sauglanzen erhalten. Diese beiden Informationen können von der Steuereinheit miteinander verglichen und verarbeitet werden.

Stellt die Steuereinheit bei einem solchen Vergleich fest, dass eine Kontrolle ergibt, dass der Dosierprozess ordnungsgemäß durchgeführt worden ist, kann dies dokumentiert werden.

Stellt die Steuereinheit bei einem Vergleich allerdings fest, dass die beiden Informationen einander widersprechen, weil nach vorliegender erster Information eine erste Medienart gefördert worden sein müsste, aber nach der Steuereinheit vorliegender zweiter Information eigentlich aufgrund eines bestimmten Anschlusses eines Behältnisses mit einem bestimmten Medium an die Steuereinheit ein anderes Medium hätte gefördert werden müssen, kann die Steuereinheit eine Fehler- oder Warnmeldung ausgeben, veranlassen oder dies in einem Dokumentationsschritt berücksichtigen.

Gemäß einer vorteilhaften Ausgestaltung der Erfindung ist vorgesehen, dass mit der Steuereinheit die Information zu der zweiten Information in Bezug setzbar ist. Mit dieser Ausführungsform kann eine Kontrolle durchgeführt werden, ob das richtige Medium gefördert worden ist.

Gemäß einer vorteilhaften Ausgestaltung der Erfindung ist vorgesehen, dass die Information über eine vorgenommene Förderung von der Steuereinheit zur Durchführung einer Bestimmung oder einer Kontrolle:
a) ob Medium gefördert wurde, und/oder
b) welches Volumen an Medium gefördert wurde, und/oder
c) welches Medium gefördert wurde, und/oder
d) ob das korrekte Medium gefördert wurde,
oder
zur Dokumentation von mit der Dosiereinrichtung durchgeführten Dosierprozessen, verwendbar ist.

Diese Ausgestaltung ermöglicht eine Vielzahl von Bearbeitungen der Dosiereinrichtung, die insbesondere dazu dienen, den Dosierprozess besonders sicher auszugestalten.

Eine Dokumentation von Dosierprozessen kann beispielsweise von der Steuereinheit der Dosiereinrichtung vorgenommen oder veranlasst werden, wobei die Daten der Dokumentation gegebenenfalls gespeichert oder zwischengespeichert werden, und bei Bedarf über eine externe Schnittstelle, z. B. über Internet, WLAN oder dergleichen, an eine Systemsteuerung oder an ein externes Gerät übergegeben werden. Eine Dokumentation von Dosierprozessen kann auch derart erfolgen, dass die Steuereinheit an ein Steuergerät eines Zielgerätes eine Information übergibt, dass ein Dosierprozess erfolgreich abgeschlossen worden ist und die weitere Dokumentation dann durch das Steuergerät des Zielgerätes veranlasst wird.

Gemäß einer vorteilhaften Ausgestaltung der Erfindung ist vorgesehen, dass die Information über eine vorgenommene Förderung von der Steuereinheit zur Durchführung einer Bestimmung der Funktionsfähigkeit der Pumpe oder einer Kontrolle der Funktionsfähigkeit der Pumpe oder zur Kalibrierung der Pumpe verwendbar ist. Auf diese Weise kann z. B. regelmäßig oder unregelmäßig geprüft werden, ob die Pumpe ordnungsgemäß arbeitet oder ob Alterungsprozesse der Dosiereinrichtung, z. B. ein alterungsbedingtes Verhalten der die Fluidleitung bereitstellenden Schläuche, eine Anpassung erfordern.

Gemäß einer vorteilhaften Ausgestaltung der Erfindung ist vorgesehen, dass von der Steuereinheit bei Durchführung der Bestimmung oder bei Durchführung der Kontrolle oder bei der Durchführung der Dokumentation eine Information über eine Art oder eine Fördermenge des Mediums und/oder über eine Information über eine Dichte des Mediums und/oder eine Information über eine Viskosität des Mediums und/oder über eine Temperatur des Mediums verwendbar ist. Diese Ausgestaltung ermöglicht eine besonders sichere Prozessführung.

Gemäß einer vorteilhaften Ausgestaltung der Erfindung ist vorgesehen, dass die Pumpe von einer Schlauchpumpe bereitgestellt ist. Dies ermöglicht einen Rückgriff auf herkömmliche, an sich bekannte Pumpen.

Gemäß einer vorteilhaften Ausgestaltung der Erfindung ist vorgesehen, dass ein von der Messeinrichtung erfasstes Signal einer Pulsation unterliegt, die von der Messelektronik erfassbar und datentechnisch verarbeitbar und/oder auswertbar ist. Diese Ausführungsform erkennt, dass insbesondere bei Schlauchpumpen Pulsationen im Strömungsverhalten des geförderten Fluids auftreten, wobei mittels der erfindungsgemäßen Dosiereinrichtung aufgrund der kurzen Ansprechzeiten die Pulsationen im Messsignal sichtbar gemacht werden können. Darüber hinaus erkennt diese Ausführungsform, dass die im Signal enthaltenen Pulsationen eine Aussage über die Fördermengen und/oder auch eine Aussage über die Art des geförderten Mediums erlauben.

Gemäß einer vorteilhaften Ausgestaltung der Erfindung ist vorgesehen, dass mit der Steuereinheit unter Berücksichtigung von Unterschieden in den Pulsationen des Signals bei Verwendung unterschiedlicher Medien auf die Art des geförderten Mediums schließbar ist. Dies ermöglicht eine besonders sichere und elegante Bestimmung einer Medienart oder deren Kontrolle.

Gemäß einer vorteilhaften Ausgestaltung der Erfindung ist vorgesehen, dass der Steuereinheit ein Speicher zugeordnet ist, in dem Werte, z. B. Kalibrierungswerte, Vergleichswerte oder Signalmuster, für unterschiedliche Medien und/oder für unterschiedliche Fördermengen oder Förderleistungen und/oder für Spülmedien, wie z.B. Wasser, abgelegt sind. Dies ermöglicht eine besonders sichere Signalverarbeitung und eine hohe Qualität und Präzision der Kontrolle und Bestimmung von Fördermengen.

Auch auf die in dem Speicher abgelegten Werte kann die Steuereinheit bei den vorzunehmenden Berechnungen zurückgreifen. Alternativ und/oder zusätzlich kann auch vorgesehen sein, dass die Messeinrichtung auf die in dem Speicher abgelegten Werte zurückgreifen kann.

Gemäß einer vorteilhaften Ausgestaltung der Erfindung ist vorgesehen, dass die Steuereinheit oder eine ihr zugeordnete Rechnereinheit unter Rückgriff auf den Speicher und unter Zuhilfenahme von Verfahren zur Signalverarbeitung, wie Spektralanalyse, eine Auswertung der Information vornimmt. Dies ermöglicht eine besonders präzise Bestimmung von geförderten Volumina und der exakten Bestimmung einer Medienart.

Gemäß einer vorteilhaften Ausgestaltung der Erfindung ist vorgesehen, dass wenigstens ein Medium von einem Spülmedium, insbesondere von Wasser, bereitgestellt ist. Diese Ausführungsform der erfindungsgemäßen Dosiereinrichtung berücksichtigt, dass vorteilhaft jedes Mal nach Dosierung eines Mediums eine Spülung mit einem Spülmedium erfolgt. Auch für das Spülmedium kann die Messeinrichtung erfindungsgemäß Informationen ermitteln. So können beispielsweise Volumina an Spülmedium bestimmt und kontrolliert werden. Diese Informationen können zur Kontrolle und Überprüfung der Funktionsfähigkeit der Pumpe eingesetzt werden.

Gemäß einer vorteilhaften Ausgestaltung der Erfindung ist vorgesehen, dass das Heizelement und/oder der Temperatursensor eine Beschichtung aufweist. Diese umfasst zum Beispiel Parylene oder Polyurethan. Diese Beschichtung ermöglicht insbesondere bei Verwendung unterschiedlicher Medien eine störungsfreie Funktion der Dosiereinrichtung und eine hohe Langlebigkeit.

Gemäß einer vorteilhaften Ausgestaltung der Erfindung ist vorgesehen, dass an die Dosiereinrichtung eingangsseitig eine Mehrzahl von Behältnissen mit gleichen oder mit unterschiedlichen Medien jeweils eine Sauglanze angeschlossen ist, wobei die Dosiereinrichtung eine Mischverteileinrichtung mit einem Stellelement aufweist, das von der Steuereinheit ansprechbar ist, und das in unterschiedlichen Stellpositionen unterschiedliche Kommunikationswege schaltet, um dem Zielgerät sukzessive unterschiedliche Medien zu zuführen. Dieses Ausführungsbeispiel ermöglicht eine Zuführung unterschiedlicher Medien sukzessive zu einem oder mehreren Zielgeräten.

Gemäß diesem Ausführungsbeispiel der Erfindung weisen die in den Behältnissen befindlichen Medien insbesondere unterschiedliche Viskositäten und/oder unterschiedliche Wärmeleitfähigkeiten auf. Bei einem Ausführungsbeispiel der Erfindung kann vorgesehen sein, dass die Messeinrichtung, insbesondere in Kooperation mit der Steuereinheit, dazu ausgebildet ist, bei der Signalverarbeitung Informationen über unterschiedliche Medien oder Informationen über unterschiedliche Viskositäten der geförderten Medien zu berücksichtigen.

Damit stellt die Erfindung einen sehr breiten Anwendungsbereich bereit, der eine sichere Bestimmung der Art des Mediums und eine sichere Bestimmung der Fördermengen, oder jeweils deren Kontrolle, über ein breites Spektrum unterschiedlicher Medien zulässt.

Die Erfindung bezieht sich vornehmlich auf eine Sauglanze, die zur Entnahme eines flüssigen Mediums aus einem Behältnis ausgebildet ist. Hier wird das Medium unter Zuhilfenahme einer Pumpe einer Dosiereinrichtung dem Zielgefäß zugeführt.

Die Erfindung bezieht sich des Weiteren aber auch auf Sauglanzen, die als Förderlanze bezeichnet werden. Mit einer Förderlanze kann von einer Dosiereinrichtung ein Medium, insbesondere eine Flüssigkeit, in ein Gebinde hinein gefördert werden.

Eine Förderlanze ist somit eine Sauglanze, die in einer geometrisch invertierten Weise betrieben wird.

Eine erfindungsgemäße Sauglanze kann also auch in umgekehrter oder invertierter Weise betrieben werden, und die Flüssigkeit nicht aus dem Gebinde hin zur Dosiereinrichtung saugen, sondern dazu dienen, von einer Dosiereinrichtung erhaltene, geförderte Flüssigkeitsvolumina hin zu einem Gebinde und hinein in ein Gebinde zu fördern. Dabei kann für die Dosiereinrichtung gleichermaßen die Information wertvoll und von Interesse sein, welcher Flüssigkeitsstand sich aktuell in dem Gebinde befindet. Alternativ oder zusätzlich kann für die Dosiereinrichtung von Interesse sein, von der Förderlanze eine Information zu erhalten, ob eine Förderung stattgefunden hat, oder welches Volumen an Medium oder welcher Art von Medium gefördert worden ist.

Gemäß einer vorteilhaften Ausgestaltung der Erfindung sind die ermittelten Informationen an eine Steuereinheit der Dosiereinrichtung übermittelbar. Dies erlaubt eine vorteilhafte Verarbeitung der erhaltenen Information.

Die Erfindung bezieht sich gemäß einem weiteren Aspekt auf eine Sauglanze nach Anspruch 3.

Die Aufgabe der Erfindung besteht darin, eine Sauglanze derartig weiterzubilden, dass sie eine erleichterte Handhabung zulässt.

Die Erfindung löst diese Aufgabe mit den Merkmalen des Anspruches 3.

Das Prinzip der Erfindung besteht im Wesentlichen darin, dass an der Sauglanze ein Flowmeter angeordnet ist. Mit Hilfe des Flowmeters kann eine Information über eine vorgenommene Förderung des Mediums durch die Sauglanze hindurch ermittelt werden. Diese Information kann an eine Steuereinheit der Dosiereinrichtung übermittelt werden.

Ein solches Flowmeter kann zum Beispiel ein Heizelement und einen Temperatursensor umfassen. Gemäß dieser Erfindung kann der Flowmeter aber auch auf andere, beliebige Weise ausgebildet sein und zum Beispiel ein Flügelrad C oder eine andere Durchflussmesseinrichtung umfassen.

Die Sauglanze nach Anspruch 3 kann mit einem Merkmal oder mit mehreren Merkmalen der Ausführungsformen der Erfindung nach Anspruch 1 im Rahmen der Erfindung beliebig kombiniert werden. Auch solche Kombinationen sind von dieser Patentanmeldung mit umfasst.

Gemäß einer weiteren vorteilhaften Ausgestaltung der Erfindung umfasst das Flowmeter wenigstens ein Heizelement und wenigstens einen mit einer Messeinrichtung verbindbaren Temperatursensor. Damit können bei einfacher Konstruktion unterschiedliche Füllstände an Medium detektiert werden.

Gemäß einer weiteren vorteilhaften Ausgestaltung der Erfindung sind entlang einer axialen Erstreckung der Sauglanze zwischen Sauglanzenfußbereich und Sauglanzenkopfbereich mehrere Heizelemente und mehrere Temperatursensoren angeordnet. Dies erlaubt eine einfache Bestimmung unterschiedlicher Füllstände mittels einer erfindungsgemäßen Sauglanze.

Gemäß einer weiteren vorteilhaften Ausgestaltung der Erfindung ist das Heizelement und/oder der Temperatursensor unmittelbar von dem Medium beaufschlagbar. Dies erlaubt eine besonders einfache Konstruktion einer erfindungsgemäßen Sauglanze.

Gemäß einer weiteren vorteilhaften Ausgestaltung der Erfindung ist die Messeinrichtung an der Sauglanze angeordnet und/oder an der Dosiereinrichtung angeordnet. Dies erlaubt eine besonders einfache Konstruktion einer erfindungsgemäßen Sauglanze.

Gemäß einer weiteren vorteilhaften Ausgestaltung der Erfindung ist das Heizelement und/oder der Temperatursensor innerhalb einer Hohlkammer der Sauglanze angeordnet, wobei die Hohlkammer insbesondere als Saugleitung ausgebildet. Dies erlaubt eine besonders einfache Konstruktion einer erfindungsgemäßen Sauglanze.

Gemäß einer weiteren vorteilhaften Ausgestaltung der Erfindung ist die Hohlkammer von dem Medium flutbar. Dies erlaubt eine besonders einfache Konstruktion einer erfindungsgemäßen Sauglanze.

Gemäß einer weiteren vorteilhaften Ausgestaltung der Erfindung ist das Heizelement und/oder der Temperatursensor in oder an einer Wandung der Sauglanze angeordnet. Dies erlaubt eine besonders einfache Konstruktion einer erfindungsgemäßen Sauglanze.

Gemäß einer weiteren vorteilhaften Ausgestaltung der Erfindung ist das Heizelement und/oder der Temperatursensor mit einer Steuerung der Dosiereinrichtung verbindbar. Dies erlaubt eine besonders einfache Konstruktion einer erfindungsgemäßen Sauglanze.

Gemäß einer weiteren vorteilhaften Ausgestaltung der Erfindung sind das Heizelement und der Temperatursensor oder mehrere Temperatursensoren zu einer Baueinheit zusammengefasst. Dies erlaubt eine besonders einfache Konstruktion einer erfindungsgemäßen Sauglanze.

Gemäß einer weiteren vorteilhaften Ausgestaltung der Erfindung weist die Baueinheit einen analogen Ausgang oder eine digitale Schnittstelle für einen Signalausgang auf. Diese Ausführung ermöglicht eine besonders einfache Montage und Datenerfassung.

Gemäß einer weiteren vorteilhaften Ausgestaltung der Erfindung sind das Heizelement und der Temperatursensor integraler Bestandteil der Sauglanze und/oder fest mit der Sauglanze verbunden. Dies erlaubt eine besonders einfache Konstruktion einer erfindungsgemäßen Sauglanze.

Gemäß einer weiteren vorteilhaften Ausgestaltung der Erfindung sind das Heizelement und/oder der Temperatursensor oder die Messelektronik mit einer Steuerung der Dosiereinrichtung oder mit einer Steuerung eines Zielgerätes verbindbar oder verbunden. Gemäß dieser Variante der Erfindung kann die Steuerung eine Auswertung eines Messergebnisses der Messelektronik vornehmen, oder einen von der Messelektronik bereitgestellten Messwert verarbeiten, insbesondere interpretieren.

Beispielsweise kann die Dosiereinrichtung bei Feststellung, dass der Medienvorrat in dem Behältnis zur Neige geht, eine Nachbestellung von Medium veranlassen, oder ein entsprechendes Bestellsignal ausgeben.

Gemäß einer weiteren vorteilhaften Ausgestaltung der vorbeschriebenen Erfindungen ist ein Temperatursensor im Sauglanzenfußbereich angeordnet ist, und weniger als 40mm, insbesondere weniger als 30 mm, insbesondere weniger als 20 mm, von einer untersten Kante der Sauglanze nach oben hin beabstandet angeordnet.

Diese Ausgestaltung ermöglicht eine besonders präzise Bestimmung eines Leerstandes im Gebinde. Dabei kann der Umstand benutzt werden, dass die Baugröße des Bauelementes, dass ein Heizelement und/ oder ein Temperatursensor umfasst, sehr kleindimensioniert gewählt werden kann und aufgrund der kleinen Abmessungen einer Positionierung des Temperatursensors sehr nahe eines unteren Kantenbereiches der Sauglanze vorgenommen werden kann.

Eine Detektion eines Gebindeleerstandes mit einer derartig hohen Präzision ermöglicht eine besonders einfache Handhabung des entleerten Gebindes und dessen Entsorgung.

Die Erfindung bezieht sich gemäß einem weiteren Aspekt auf ein System nach Anspruch 14.

Der Erfindung liegt die Aufgabe zugrunde, ein System anzugeben, das eine erleichterte Durchführung von Dosierprozessen ermöglicht.

Die Erfindung löst diese Aufgabe mit den Merkmalen des Anspruches 14.

Das erfindungsgemäße System dient zur Dosierung von Medien, insbesondere von Flüssigkeiten. Als Medium im Sinne der vorliegenden Patentanmeldung werden beispielsweise Waschmittel oder Reinigungsmittel oder deren Bestandteile angesehen. Das erfindungsgemäße System umfasst wenigstens ein Behältnis zur Aufnahme des Mediums. Von der Erfindung sind auch Ausführungsbeispiele umfasst, bei denen mehrere Behältnisse mit gleichen oder unterschiedlichen Medien vorgesehen sind.

Das System umfasst darüber hinaus eine Dosiereinrichtung. Dabei kann es sich beispielsweise um eine Schlauchpumpe oder eine andere geeignete Pumpe handeln, die insbesondere eine Steuerung umfasst. Die Dosiereinrichtung dient dazu, einem Zielgefäß, z. B. einer Waschmaschine oder einer Reinigungsanlage oder einer Geschirrspülmaschine das Medium - insbesondere zu einem vorher bestimmten Zeitpunkt und in einer vorbestimmten Menge - zuzuführen. Die Steuerung der Dosiereinrichtung kann die Pumpe für einen vorbestimmten Zeitraum oder beispielsweise auch für eine vorbestimmte Zahl von Umdrehungen ansprechen, um die gewünschte Menge, oder das gewünschte Volumen an Medium, aus dem Behältnis heraus zu entnehmen, und dem Zielgefäß zuzuführen.

Die Zuführung erfolgt unter Zuhilfenahme einer Sauglanze. Als Sauglanze wird insbesondere ein im wesentlichen rohrförmiger Körper bezeichnet, der einen Sauglanzenkopf und einen Sauglanzenfuß sowie einen den Sauglanzenkopf und den Sauglanzenfuß miteinander verbindenden zylindrischen, oder im wesentlichen zylindrischen Abschnitt aufweist. Die Sauglanze wird insbesondere durch eine Öffnung in einer Deckenwand des Behältnisses in das Behältnis eingesteckt. Das Behältnis - welches auch als Gebinde bezeichnet wird - kann z. B. ein Kanister oder ein Container sein. Der Fuß der Sauglanze kann auf den Boden des Behältnisses aufgesetzt werden. Von dieser Formulierung im Sinne dieser Patentanmeldung und von der Erfindung sind auch Sauglanzen bzw. Systeme mit solchen Sauglanzen umfasst, die im Bereich eines Gebindedeckels gehalten werden und mit ihrem Sauglanzen-Fußbereich an den Boden des Gebindes nahe herangebracht werden, so dass sie diesen berühren oder so, dass sie diesen nahezu berühren.

Der Kopf der Sauglanze kann sich im montierten Zustand innerhalb oder außerhalb des Behältnisses befinden. Im Bereich des Kopfes der Sauglanze ist ein Schlauchanschluss vorgesehen, um eine Verbindung der Förderleitung zu der Dosiereinrichtung bereitzustellen.

Die Sauglanze gemäß der Erfindung weist zumindest eine Saugleitung auf, durch die hindurch das Medium von dem Sauglanzenfuß zum Sauglanzenkopf und weiter zur Dosiereinrichtung und schließlich weiter zum Zielgefäß gefördert werden kann.

Von der Erfindung sind auch Systeme - sowie Sauglanzen - umfasst, bei denen die Sauglanze mehrere Saugleitungen, z. B. zwei oder drei oder mehr als drei Saugleitungen aufweist. Derartige Sauglanzen dienen gemäß der Erfindung dazu, einen Anschluss an mehrere Dosiereinrichtungen zu ermöglichen, so dass zeitgleich - oder zu unterschiedlichen Zeitpunkten - mehrere Dosiereinrichtungen Zugriff auf dasselbe Behältnis haben und aus diesem das Medium zu unterschiedlichen Zielgefäßen hin fördern können.

Die Erfindung bezieht sich gemäß einem weiteren Aspekt auf eine Sauglanze nach Anspruch 15.

Dieser Erfindung liegt die Aufgabe zugrunde, eine eingangs beschriebene Sauglanze der gattungsgemäßen Art derartig weiter zu bilden, dass sie eine verbesserte Durchführung von Dosierprozessen erlaubt.

Die Erfindung löst diese Aufgabe mit den Merkmalen des Anspruches 15.

Das erfindungsgemäße Prinzip besteht darin, dass die Sauglanze eine Temperaturmesseinrichtung aufweist. Mit der Temperaturmesseinrichtung kann erfindungsgemäß die Temperatur eines Mediums oder eine Temperatur einer Umgebung der Sauglanze gemessen werden, also eine Umgebung, in der sich die Sauglanze befindet, oder in der sich das Medium befindet.

Die Information über die zu messende Temperatur wird als Temperaturinformation bezeichnet. Diese Temperaturinformation ist an die Steuereinheit der Dosiereinrichtung übermittelbar. Hierzu kann die Steuereinheit der Dosiereinrichtung beispielsweise mit der Temperaturmesseinrichtung mittelbar oder unmittelbar verbunden sein.

Die Steuereinheit der Dosiereinrichtung kann die erhaltene Temperaturinformation bei Ansteuerung der Pumpe nachfolgend berücksichtigen.

Diese Berücksichtigung kann im Zuge der Durchführung eines Dosierprozesses oder auch bei der Kalibrierung der Pumpe erfolgen. Die Erfindung erkennt, dass die Viskosität von Medien, darin enthalten auch die Viskosität von Wasser, temperaturabhängig ist. Im Zusammenhang mit der Durchführung von Dosierprozessen, zum Beispiel im Bereich des gewerblichen Spülens oder des gewerblichen Waschens, werden regelmäßig Medien eingesetzt, deren Viskosität bei steigender Temperatur zunimmt. Es sind aber zum Beispiel auch Medien bekannt, deren Viskosität mit steigender Temperatur abnimmt. Die Viskositätsunterschiede können in bestimmten Temperaturbereichen maßgeblich und für Dosierprozesse bedeutsam sein und bei Nichtberücksichtigung zu nicht ordnungsgemäßen Dosierprozessen führen.

Unterschiedliche Viskositäten führen zu unterschiedlichen Fließverhalten der Medien. Eine Förderung eines Mediums mit einer Schlauchpumpe ist zum Beispiel unproblematisch, wenn das Medium niederviskos ist, kann aber Probleme bereiten, wenn es eine höhere Viskosität einnimmt. Um auch bei unterschiedlichen Temperaturen des Mediums oder bei unterschiedlichen Umgebungstemperaturen jeweils die für den Wasch- oder Reinigungsprozess exakt erforderliche Menge an Medium dosieren zu können, kann die Steuereinheit die temperaturabhängigen Unterschiede in der Viskosität berücksichtigen und beispielsweise bei höheren Temperaturen die Pumpe über eine längere Laufzeit eine Förderung des Mediums durchführen lassen, und so die höhere Viskosität ausgleichen und im Ergebnis die geforderte und gewünschte Menge an Medium an ein Zielgefäß fördern.

Gemäß einer vorteilhaften Ausgestaltung der Erfindung sind in einem Speicher der Dosiereinrichtung, auf den die Steuereinheit zugreifen kann, Viskositätsinformationen abgelegt. Diese umfassen Informationen über unterschiedliche Viskositäten eines Mediums oder unterschiedlicher Medien bei unterschiedlichen Temperaturen. Hier können zum Beispiel kontinuierliche oder diskrete Werte für die Viskosität abgelegt sein. Die Ablegung dieser Viskositätsinformationen kann in Form von Algorithmen, Kurven, Tabellen etc. erfolgen.

Gemäß einer weiteren vorteilhaften Ausgestaltung der Erfindung kann die Steuereinheit die Temperaturinformationen zu den Viskositätsinformationen in Bezug setzen. Nach einem Inbezugsetzen dieser Informationen, kann die Steuereinheit bei der Durchführung eines Dosierprozesses oder bei einem Vorgang zur Kalibrierung der Pumpe die Viskositätsinformationen und die Temperaturinformationen berücksichtigen.

Bei einer vorteilhaften Ausgestaltung der Erfindung ist die Temperaturmesseinrichtung von dem Temperatursensor bereitgestellt. Hier schlägt die Erfindung zwei Fliegen mit einer Klappe: Der Temperatursensor, mit dessen Hilfe eine Information über die vorgenommene Förderung des Mediums durch die Förderleitung ermittelbar ist, kann zugleich dazu eingesetzt werden, Informationen über die Temperatur des Mediums oder der Umgebung zu erlangen, um temperaturabhängige Viskositäten des Mediums bei einem Dosierprozess berücksichtigen zu können.

Weitere Vorteile der Erfindung ergeben sich aus den nicht zitierten Unteransprüchen sowie anhand der nachfolgenden Beschreibung der in den Zeichnungen dargestellten Ausführungsbeispiele.

Darin zeigen:
- Fig. 1: Ein erstes Ausführungsbeispiel einer erfindungsgemäßen Sauglanze und eines erfindungsgemäßen Systems in einer schematischen, blockschaltbildartigen Darstellung wobei an der Sauglanze gemäß einer ersten Variante der Erfindung ein Flowmeter angeordnet ist und gemäß einer weiteren Variante der Erfindung eine Temperaturmesseinrichtung angeordnet ist,
- Fig. 2a: das Ausführungsbeispiel der Figur 1 in teilgeschnittener, vergrößerter, schematischer Darstellung, etwa entlang Teilkreis Ila in Figur 1, unter Veranschaulichung eines Heizelementes, das mit einem Temperatursensor integriert ausgebildet ist, sowie unter schematischer Darstellung einer Messschaltung,
- Fig. 2b: ein weiteres Ausführungsbeispiel in einer Darstellung ähnlich Figur 2a mit zwei Temperatursensoren,
- Fig. 3: ein weiteres Ausführungsbeispiel einer erfindungsgemäßen Sauglanze und eines erfindungsgemäßen Systems in einer Darstellung ähnlich Figur 1, wobei an der Sauglanze mehrere Temperatursensoren angeordnet sind, insbesondere um einen Füllstand an Medium in dem Behältnis zu ermitteln,
- Fig. 4: in einer teilgeschnittenen schematischen, vergrößerten Ausschnittsdarstellung etwa entlang Teilkreis IV in Figur 3, eine Darstellung eines Sauglanzenfußbereiches,
- Fig. 5: in einer teilgeschnittenen, schematischen, vergrößerten Ansicht einen Querschnitt durch ein Ausführungsbeispiel einer erfindungsgemäßen Sauglanze, etwa entlang Schnittelement V in Figur 3, wobei das Ausführungsbeispiel der Figur 5 gegenüber dem Ausführungsbeispiel der Figur 3 geändert ist, und wobei bei dem Ausführungsbeispiel der Figur 5 ein Hohlkammerprofil etwa zentriert mittig, innerhalb eines Innenraums der Sauglanze angeordnet ist,
- Fig. 6: ein weiteres Ausführungsbeispiel einer erfindungsgemäßen Sauglanze in einer Querschnittsdarstellung ähnlich Figur 5, mit einem drei Hohlkammern umfassenden Profil,
- Fig. 7: ein weiteres Ausführungsbeispiel einer erfindungsgemäßen Sauglanze und eines erfindungsgemäßen Systems in einer Darstellung ähnlich Figur 1, wobei eine Sauglanze in Form eines axial kurz gehaltenen Körpers vorgesehen ist, der in ein Saugrohr, das fest in dem Behältnis angeordnet ist, eingesteckt ist,
- Fig. 8: das Ausführungsbeispiel der Figur 7, wobei die Sauglanze von dem fest im Behältnis angeordneten Saugrohr gelöst und beabstandet angeordnet ist,
- Fig. 9: in einer schematischen Darstellung ein weiteres Ausführungsbeispiel einer erfindungsgemäßen Sauglanze in einer Darstellung vergleichbar Figur 3 in Einzeldarstellung, mit einer Mehrzahl von Heizelementen und einer Mehrzahl von Temperatursensoren, zur Füllstandsbestimmung, und
- Fig. 10: in einer schematischen Prinzipdarstellung eine Messschaltung für eine Sauglanze gemäß Figur 9.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Ein Ausführungsbeispiel einer erfindungsgemäßen, in ihrer Gesamtheit mit dem Bezugszeichen 10 bezeichneten Sauglanze wird nachfolgend erläutert:

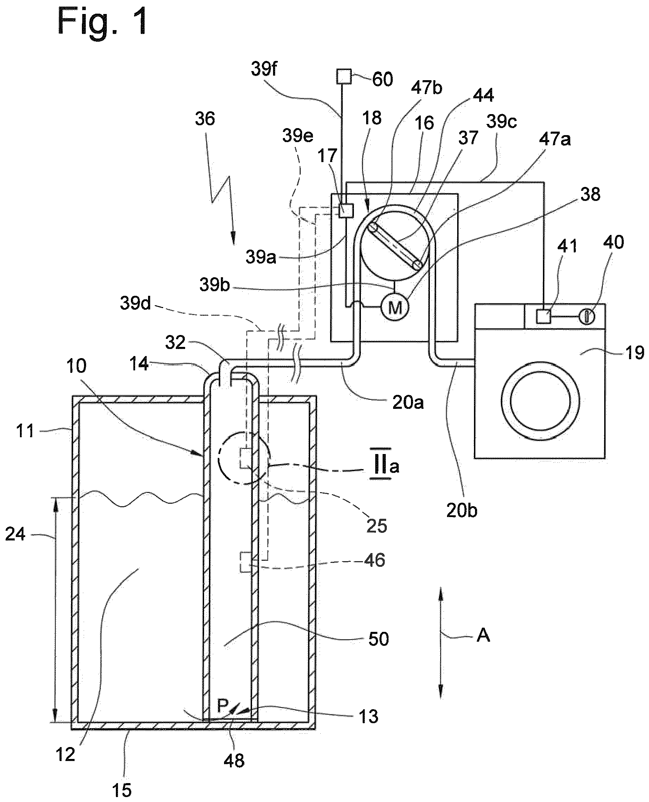

Figur 1 zeigt ein erfindungsgemäßes System 36, welches eine Dosiereinrichtung 16 umfasst. Wesentlicher Bestandteil der Dosiereinrichtung 16 sind eine Steuereinheit 17 und eine Pumpe 18. Die Steuereinheit 17 kann einen Motor 38 der zum Beispiel als Schlauchpumpe ausgebildeten Pumpe 18 über eine Signalleitung 39a ansprechen. Die Schlauchpumpe 18 umfasst zum Beispiel einen Rotor 37, der unter Zuhilfenahme von Walzen 47a, 47b einen Schlauchabschnitt 44 einer Förderleitung oder Fluidleitung 20a, 20b in herkömmlicher Weise propagierend quetschen kann.

Die Dosiereinrichtung 16 ist dazu ausgebildet, eine vorherbestimmte Menge an Medium 12 aus einem Behältnis 11 unter Zuhilfenahme einer Sauglanze 10 und einer Fluidleitung 20a zu einem Zielgerät 19 hin zu fördern. Das Zielgerät 19 kann zum Beispiel eine gewerbliche Waschmaschine oder eine gewerbliche Spülmaschine oder eine andere Reinigungsanlage sein. Das Zielgerät 19 kann über einen Programmwahlschalter 40 verfügen, der mit einer Steuerung 41 des Zielgerätes 19 verbunden ist. Über eine Signalleitung 39c kann die Steuereinheit 17 der Dosiereinrichtung 16 von dem Zielgerät 19 Anforderungssignale für eine Förderung von Medien zu einem bestimmten Zeitpunkt erhalten.

Die Sauglanze 10 weist einen Sauglanzenfußbereich 13 auf, mit dem sie auf einem Boden 15 des Behältnisses 11 aufgesetzt werden kann oder an diesen herangesetzt werden kann. Die Sauglanze 10 weist einen Sauglanzenkopfbereich 14 auf, der einen Anschluss zur Verbindung mit der Dosiereinrichtung 16 umfasst. Der Anschluss kann auch nicht dargestellte Schlauchverbinder oder Schlauchanschlüsse aufweisen. So kann an der Sauglanze 11 beispielsweise ein Stutzenabschnitt 32 angeordnet sein, der mit einem Abschnitt 20a der Fluidleitung, zum Beispiel einer Schlauchleitung, verbindbar ist.

Die erfindungsgemäße Sauglanze 10 kann über eine Signalleitung 39d oder gegebenenfalls auch über eine weitere Signalleitung 39e mit der Steuereinheit 17 der Dosiereinrichtung 16 verbindbar sein. Hierzu können gegebenenfalls auch Steckverbinder oder geeignete Anschlüsse vorgesehen sein.

Die Sauglanze 10 ist insbesondere ein in Axialrichtung A lang gestrecktes, im Wesentlichen zylindrisches Gebilde, das einen konstanten oder einen im Wesentlichen konstanten Querschnitt aufweisen kann. Die Sauglanze 10 kann als Hohlkörper ausgebildet sein und wenigstens eine Saugleitung 50 umfassen. Der von der Pumpe 18 der Dosiereinrichtung 16 generierte Unterdruck kann zu einem Ansaugen und Fördern des Mediums 12 verwendet werden. Die Sauglanze 11 kann eine einzige Saugleitung 50 aufweisen, wie dies Figur 1 andeutet. Hier kann die Sauglanze 10 zum Beispiel im Querschnitt kreisförmig ausgebildet sein und der gesamte hohle Innenraum kann als Saugleitung 50 fungieren.

Die später zu beschreibende Baueinheit 31, die ein Heizelement 21 und einen Temperatursensor 22 umfasst, kann an einer Wandung 30 der Sauglanze 10 angeordnet sein.

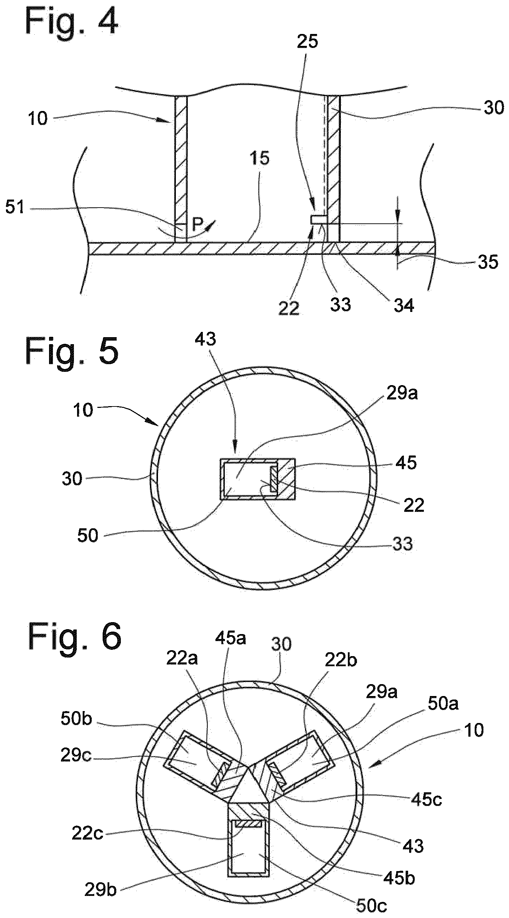

Wie Figur 5 deutlich macht, kann in der Sauglanze 10 aber auch ein Profil, insbesondere ein Hohlkammerprofil 43, angeordnet sein, das eine Hohlkammer aufweist, wobei die Hohlkammer 29 des Profils 43 als Saugleitung 50 fungiert.

Figur 6 zeigt, dass die Sauglanze 10 auch mehrere Hohlkammern 29a, 29b, 29c aufweisen kann, so dass mehrere Saugleitungen 50a, 50b, 50c zur Verfügung gestellt werden, die zum Beispiel ein Behältnis 11 mit mehreren Dosiereinrichtungen 16 verbinden.

Dabei kann vorgesehen sein, dass jeder Saugleitung 50a, 50b, 50c ein eigener Temperatursensor 22a, 22b, 22c zugeordnet ist, der an einer entsprechenden Wand 45a, 45b, 45c angeordnet ist. Somit kann jeder Saugleitung 50a, 50b, 50c ein eigener Flowmeter 25a, 25b, 25c zugeordnet sein. Von der Erfindung ist auch umfasst, wenn die Sauglanze 10 mehrere Saugleitungen 50a, 50b, 50c umfasst, wobei die Sauglanze 10 nur eine einzige Einrichtung 52 zur Füllstandsmessung aufweist. Dies gilt insbesondere, wenn der Füllstand in den einzelnen Saugleitungen 50a, 50b, 50c gleich ist, zum Beispiel weil alle Saugleitungen 50a, 50b, 50c immer gleichmäßig geflutet werden.

Gemäß einer ersten erfindungsgemäßen Besonderheit ist an der Sauglanze 10 gemäß Figur 1 eine Durchflussmesseinrichtung, ein sog. Flowmeter 25, angeordnet.

Figur 1 veranschaulicht einen Flowmeter 25, der im Bereich der Saugleitung 50 angeordnet ist und in die Fluidleitung hineinragt.

Ein solcher Flowmeter 25 kann zum Beispiel mechanische Elemente umfassen und zum Beispiel als Flügelradzähler ausgebildet sein. Alternativ kommen Flowmeter in Betracht, die mit Schwebekörpern arbeiten, und zum Beispiel unter Zuhilfenahme optischer oder anderer Einrichtungen und Messverfahren eine Verlagerung eines Schwebekörpers in Folge einer Fluidförderung veranlassen, wobei solch eine Bewegung detektiert werden kann.

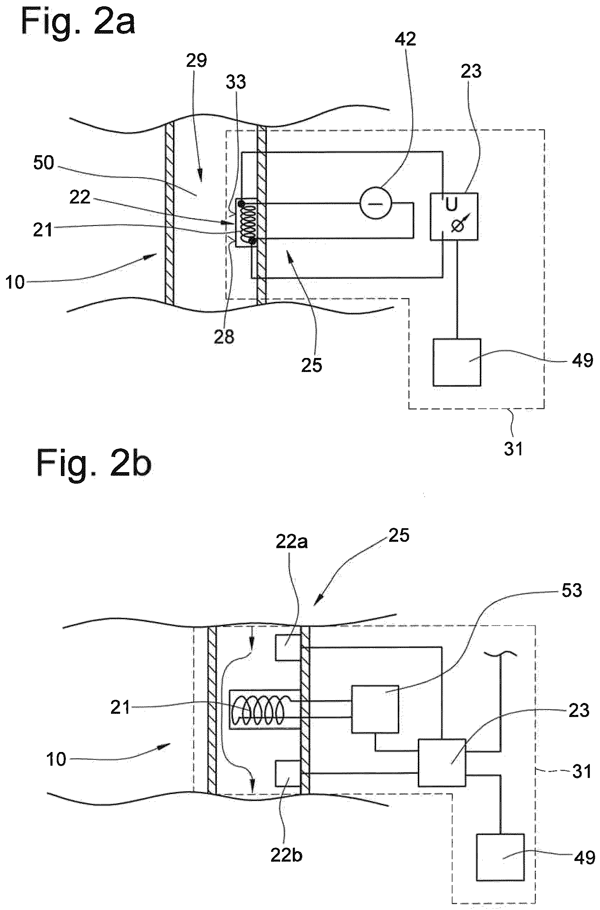

Gemäß dem Ausführungsbeispiel der Figur 2 wird deutlich, dass der Flowmeter 25 auch ein Heizelement 21 und einen Temperatursensor 22 umfassen kann. Beispielsweise können diese Elemente 21, 22 integriert von einem PTC-Bauelement oder von einem NTC-Bauelement bereitgestellt sein oder ein solches Bauelement umfassen. Es handelt sich dabei um Bauelemente, die einen temperaturabhängigen Widerstand 57a, 57b, 57c aufweisen, wobei dieser Widerstand heizbar ist.

Gemäß Figur 2 wird das Heizelement 21 von einer Stromquelle oder einer Spannungsversorgungsquelle 42, zum Beispiel von einer Konstantstromquelle, mit Strom oder Spannung versorgt und aufgeheizt. Der über den Widerstand abfallende Spannungswert kann von einer Messeinrichtung 23 gemessen werden. Die gemessene Spannung U ist ein Maß für den temperaturabhängigem Widerstand, wobei der gemessene Widerstand wiederum ein Maß für die Temperatur des Widerstandes ist. Der Widerstand ist über eine Beaufschlagungsfläche 28 unmittelbar der Saugleitung 50 ausgesetzt und damit auch unmittelbar einem etwaig in der Saugleitung 50 befindlichen Medium 12 ausgesetzt.

Wenn, veranlasst durch die Pumpe 18, eine Medienförderung durch die Saugleitung 10 hindurch durchgeführt wird, nimmt das entlang der Baufschlagungsfläche 28 des Temperatursensors 22 strömende Medium die von dem Heizelement 21 generierte Wärme mit, sodass sich die Temperatur in unmittelbarer Umgebung des Temperatursensors 22 erniedrigt. Dies führt zu einer Änderung der Temperatur des Temperatursensors 22 und auch zu einer Änderung des von der Messeinrichtung 23 gemessenen Messwertes. Damit geht bei einem temperaturabhängigen Widerstand, wie zum Beispiel einem PTC-Element oder einem NTC-Element, auch eine Änderung des temperaturabhängigen Widerstandes einher. Aus dem Widerstand oder aus einem aus der Änderung des Widerstandes abgeleiteten Messwertes, zum Beispiel einer über den Widerstand abfallenden Spannung, ist eine Information über eine vorgenommene Förderung an Medium 12 durch die Saugleitung 50 der Sauglanze 10 hindurch ermittelbar. Insbesondere aus dem Messwert des Temperatursensors 22 ist eine solche Information ermittelbar.

Auch kann durch den ermittelten Messwert eine Information erlangt werden, ob eine Beaufschlagungsfläche 28 Medium 12 oder Luft ausgesetzt ist, da diese beiden Medien völlig unterschiedliche Wärmeaufnahmekapazitäten aufweisen und damit in unterschiedlichem Maße an dem Heizelement 21 generierte Wärme abzuleiten vermögen.

Eine Rechnereinheit 49 kann Bestandteil einer Baueinheit 31 sein, die das Heizelement 21 mit dem Temperatursensor 22 umfasst. Die Rechnereinheit 49 kann in der Lage sein, einen Messwert oder eine Änderung des Messwertes zu ermitteln und zu interpretieren.

Von der Erfindung ist auch umfasst, wenn aus den erhaltenen Messwerten die geförderte Fluidmenge und gegebenenfalls auch die Art des geförderten Mediums erkannt werden kann.

Die Rechnereinheit 49 kann, was Figur 2a nicht zeigt, mit der Steuereinheit 17 der Dosiereinrichtung 16 verbunden sein.

Die Messeinrichtung 23 und/oder der Rechner 49 können auch in die Dosiereinrichtung 16 integriert sein und/ oder teilweise an der Sauglanze 10 angeordnet sein, und/ oder an einem gesonderten, nicht dargestellten Element angeordnet sein.

Das Heizelement 21 und der Temperatursensor 22, oder weitere elektronische Bauelemente, insbesondere Teile der Messeinrichtung 23 oder die gesamte Messeinrichtung 23, können zu einer Baueinheit 31 zusammengefasst sein.

Der Temperatursensor 22 kann mit einer Beaufschlagungsfläche 28 ausgestaltet sein, die eine Beschichtung 33 aufweisen kann. Die Beschichtung kann z. B. Polyurethan oder keramisches Material umfassen.

Das Ausführungsbeispiel der Figur 2a zeigt eine Ausgestaltung, bei der der Temperatursensor 22 und das Heizelement 21 miteinander integriert ausgebildet sind und zum Beispiel von einem PTC-Element oder NTC-Element bereitgestellt sind oder ein solches umfassen. Demgegenüber zeigt das Ausführungsbeispiel der Figur 2b eine Ausführungsform, bei der der Temperatursensor 22 und das Heizelement 21 von gesonderten Bauelementen bereitgestellt sind. Darüber hinaus ist bei dem Ausführungsbeispiel der Figur 2b ein Paar von Temperatursensoren 22a und 22b vorgesehen, die beispielsweise äquidistant zu dem Heizelement 21 angeordnet sein können. Diese Ausführungsform kann zum Beispiel mittels einer Differenzmessung der von den beiden Temperatursensoren 22a und 22b ermittelten Messwerte eine Förderung eines Fluides auf besonders einfache Weise feststellen.

Anhand der Ausführungsbeispiele der Figuren 1, 2a und 2b wurde ein Aspekt der Erfindung beschrieben, wonach ein Flowmeter 25 an der Sauglanze 10 vorgesehen ist. Dieses Flowmeter 25 kann an beliebiger Stelle an der Sauglanze 10, insbesondere im Bereich einer Saugleitung 50, vorgesehen sein. Für den Fall, dass eine Sauglanze 10 gemäß der Erfindung, wie beispielsweise gemäß Figur 6 angedeutet, mehrere Saugleitungen 50a, 50b, 50c umfasst, können auch mehrere Flowmeter 25a, 25b, 25c vorgesehen sein.

Ein Flowmeter 25 oder eine entsprechende Baueinheit 31 kann über eine Signalleitung 39d mit der Steuereinheit 17 der Dosiereinrichtung 16 in Verbindung stehen und zum Beispiel ein Signal an die Dosiereinrichtung 16 übermitteln. Aus dem übermittelten Signal kann zum Beispiel die Steuereinheit 17 der Dosiereinrichtung 16 eine Information ermitteln, dass eine Fluidförderung stattgefunden hat. An der Steuereinheit 17 der Dosiereinrichtung 16 kann darüber hinaus bei Bedarf auch eine weitere Signalverarbeitung erfolgen.

Von der Erfindung ist auch umfasst, wenn entlang der axialen Erstreckung der Sauglanze 10 mehrere Flowmeter 25 vorgesehen sind.

Gemäß einem weiteren Aspekt der Erfindung können an der erfindungsgemäßen Sauglanze 10 auch wenigstens ein Heizelement 21 und wenigstens ein Temperatursensor 22 angeordnet sein, die nicht oder nicht zwingend dazu dienen, eine Information über eine Förderung von Medium 12 durch die Sauglanze 10 zu übermitteln, sondern die eine Füllstandsinformation bereitstellen.

Wiederum kann zur Erläuterung auf Figur 2a verwiesen werden: Unter der Annahme, dass ein Heizelement 21 mit elektrischer Heizleistung beaufschlagt wird und über einen Temperatursensor 22, z. B. über einen intrigierten Temperatursensor 22, eine Temperatur in unmittelbarer Nähe oder Nachbarschaft des Heizelementes 21 gemessen wird, wird sich die gemessene Temperatur bei gleichbleibender Heizleistung unterscheiden, in Abhängigkeit davon, ob das Heizelement 21 von einem flüssigen Medium 12 umgeben ist, oder von Luft. Entlang eines flüssigen Mediums 12 kann Wärme erleichtert abgeführt werden, so dass sich zum Beispiel bei konstant zugeführter Heizleistung ein anderes Temperaturgleichgewicht einstellt, als wenn das Heizelement 21 nur von Luft umgeben wäre.

Damit kann durch Messung einer Temperatur in Nachbarschaft des Heizelementes 21, insbesondere unter Zuhilfenahme eines Temperatursensors 22, eine Information erlangt werden, ob sich benachbart des Heizelementes 21 flüssiges Medium 12 oder Luft befindet. Diese Information kann von einer Rechnereinheit 49 eines Bauelementes 31 und/oder von einer Steuereinheit 17 der Dosiereinrichtung 16 verarbeitet werden. Hieraus kann zum Beispiel die Information ermittelt werden, welcher Füllstand 32 an Medium 12 in dem Behältnis 11 aktuell besteht.

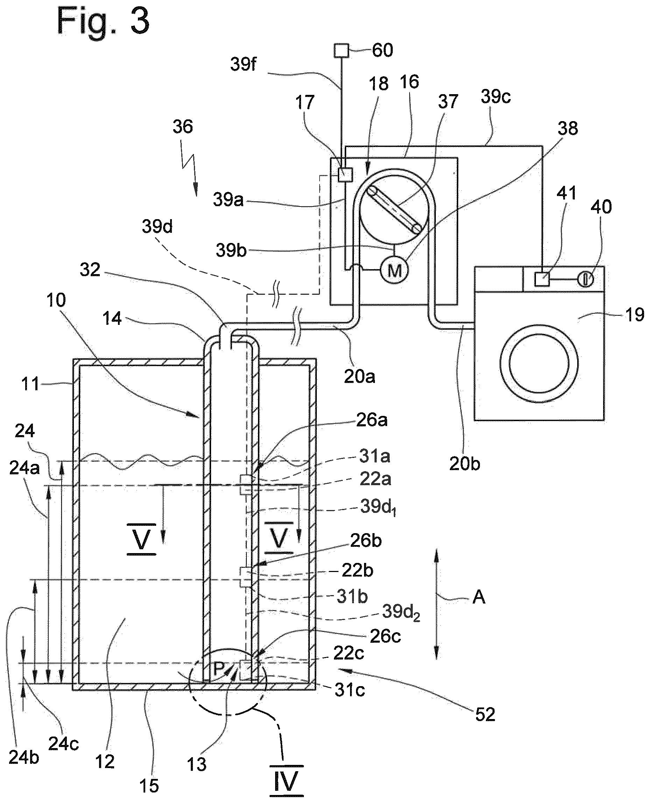

Das Ausführungsbeispiel der Figur 3 zeigt eine Sauglanze 10, die drei Baueinheiten 31a, 31b, 31c umfasst, die jeweils ein Heizelement 21 und einen Temperatursensor 22 aufweisen. Damit kann an drei verschiedenen Positionen, bezogen auf die axiale Erstreckung der Sauglanze 10, eine Feststellung erfolgen, ob dort Medium 12 ansteht oder nicht. Die Zahl der Bauelemente 31a, 31b, 31c ist beliebig wählbar.

Bei dem Ausführungsbeispiel der Figur 3 ist die Baueinheit 31a über eine Signalleitung 39d₁ mit der Baueinheit 31b verbunden. Die Baueinheit 31b ist über eine weitere Signalleitung 39d₂ mit der Baueinheit 31c verbunden. Die Baueinheiten 31a, 31b, 31c können hier also signaltechnisch in Reihe geschaltet sein oder über eine BUS-Leitung miteinander verbunden sein. Bei anderen Ausführungsbeispielen können auch Sternschaltungen der Baueinheiten 31a, 31b, 31c vorgesehen sein.

Mit der Baueinheit 31a kann festgestellt werden, ob das Behältnis einen Füllstand 24a aufweist. Mit der Baueinheit 31b kann festgestellt werden, ob das Behältnis einen Füllstand 24b aufweist. Mit der Baueinheit 31c kann festgestellt werden, ob das Behältnis einen Füllstand 24c aufweist. Die Positionierung der Baueinheiten 31a, 31b, 31c hängt davon ab, wie detailliert man sich einen Überblick über verschiedene Füllstände 24, 24a, 24b, 24c im Behältnis 11 verschaffen möchte.

Von besonderem Interesse ist unter Bezugnahme auf Figur 3 und Figur 4 die Anordnung eines Heizelementes 21 und/oder eines Temperatursensors 22 unmittelbar benachbart einer untersten Kante 34 der Sauglanze 10. Insbesondere kann eine Anordnung von Heizelement 21 und/oder Temperatursensor 22 unter einem so geringen Abstand 35 erfolgen, wobei der Abstand 38 von der untersten Kante 34 der Sauglanze 10 bemessen wird, dass dieser Abstand 35 weniger als 40mm, vorzugsweise weniger 30mm, weiter vorzugsweise weniger als 20mm beträgt. Damit kann eine vollständige Restentleerung des Gebindes 11 präzise festgestellt werden.

Unter der Annahme, dass die Sauglanze 10 mit ihrer untersten Kante 34 auf den Boden 15 des Behältnisses 11 aufgesetzt wird, wobei üblicherweise Einlassöffnungen 51 für das Medium 12 im Sauglanzenfußbereich 13 vorgesehen sind, genügt eine Benetzung des Heizelementes 21 und/oder des Temperatursensors 22 und/oder der Beaufschlagungsfläche 28 mit Medium 12, um eine Präsenz an Medium 12 festzustellen.

Erst, wenn der Füllstand 24 an Medium 12 in dem Behältnis 11 diesen Abstand 35 unterschreitet, wird eine Leermeldung generiert. Damit kann ein nahezu vollständiges Entleeren des Behältnisses 11 detektiert werden.

In Figur 4 ist zur Veranschaulichung des bei Betrieb der Pumpe 18 durch die Einlassöffnung 51 hindurch strömenden Fluids oder Mediums 12 ein Strömungspfeil mit dem Bezugszeichen P bezeichnet.

Die Erfindung bezieht sich gemäß einem weiteren Aspekt auf eine Sauglanze 10, an der eine Temperaturmesseinrichtung 46 vorgesehen ist. Dieses Ausführungsbeispiel wird in Figur 1 dargestellt:
Hier ist eine Temperaturmesseinrichtung 46 über eine Signalleitung 39e mit der Steuereinheit 17 der Dosiereinrichtung 16 verbunden. Die Temperaturmesseinrichtung 46 kann die Temperatur des Mediums 12 messen und diesen Temperaturmesswert an die Steuereinheit 17 übermitteln. Die Steuereinheit 17 kann mit einem Speicher 60 zusammenwirken. In dem Speicher 60 können für ein oder mehrere Medien 12 Werte für die Viskosität in Abhängigkeit unterschiedlicher Temperaturen abgelegt sein. Auf diese Viskositätinformationen kann die Steuereinheit 17 der Dosiereinrichtung 16 im Rahmen eines Dosierprozesses - oder bei einer Kalibrierung der Pumpe 18 - zurückgreifen.

Von der Erfindung ist auch umfasst, wenn die Temperaturmesseinrichtung 46 von dem Temperatursensor 22 des Flowmeters 25 oder der Füllstandsmesseinrichtung 52 bereitgestellt ist.

Bei dieser Variante kann der von einem Temperatursensor 22 einer Baueinheit 31 ermittelte Temperaturwert auch zur Optimierung eines Dosierprozesses im Sinne einer exakten Ansteuerung der Pumpe 18 unter Berücksichtigung von Viskositätsinformationen genutzt werden, ohne dass eine gesonderte Temperaturmesseinrichtung 46 vorgesehen werden muss.

Von der Erfindung ist weiter umfasst, wenn ein Flowmeter 25 als Füllstandsmesseinrichtung 52 eingesetzt wird. Bei dieser Variante kann zum Beispiel ein Flowmeter 25 im Bereich des Sauglanzenfußes 14 angeordnet sein, und eine Information über eine Förderung des Mediums 12 generieren und zugleich - bei vollständiger Entleerung - eine Leerstandsmeldung des Gebindes generieren.

Bei dem Ausführungsbeispiel der Figur 2b ist eine Heizungssteuerung 53 vorgesehen. Die Heizungssteuerung 53 kann das Heizelement 28 des Ausführungsbeispiels der Figur 2 zum Beispiel mit konstanter oder variabler Heizleistung ansteuern.

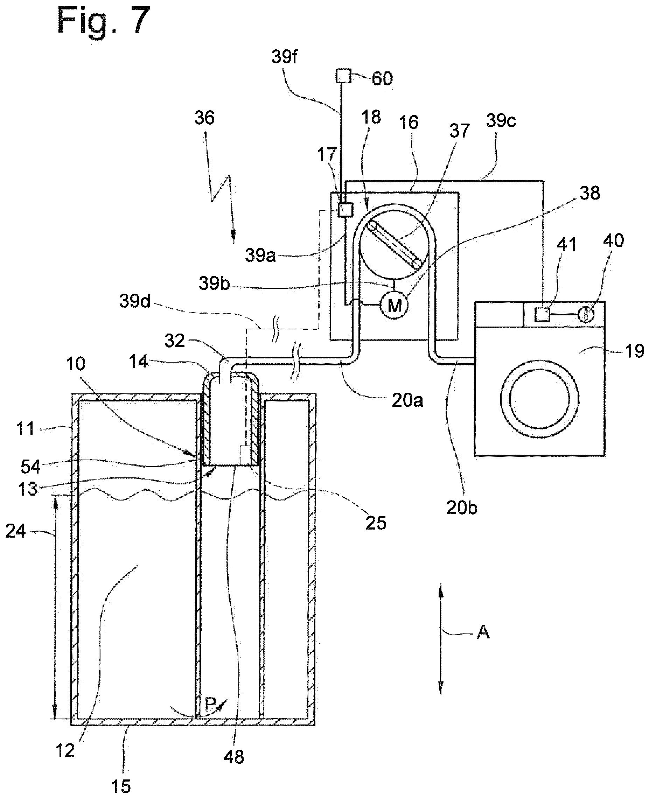

Figur 7 zeigt ein weiteres Ausführungsbeispiel einer erfindungsgemäßen Sauglanze 10:

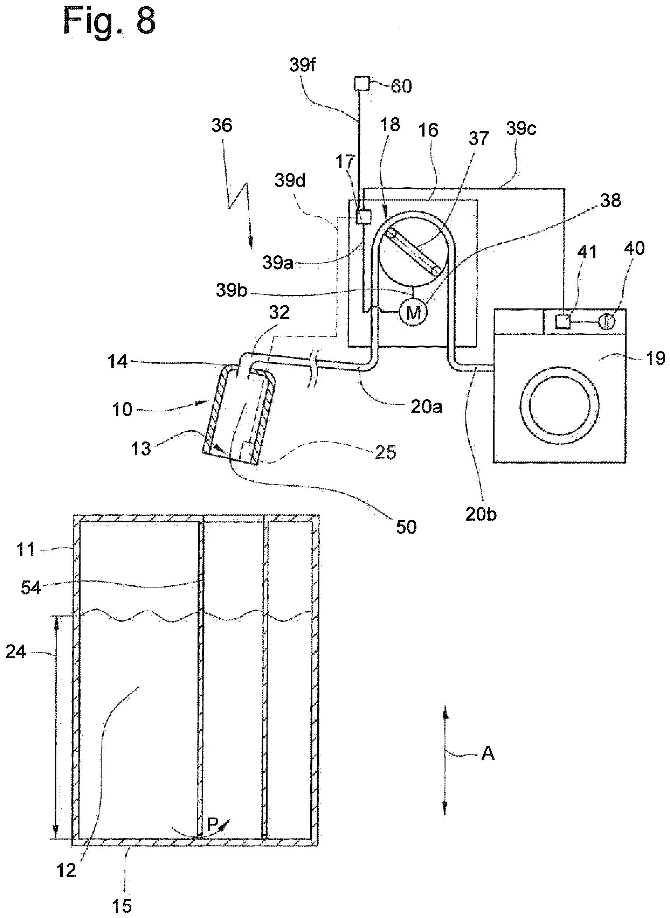

Diese Sauglanze 10 ist in Axialrichtung kurz ausgebildet und umfasst einen Sauglanzenfuß 13 und einen Sauglanzenkopf 14. Der Sauglanzenfuß 13 ist bei diesem Ausführungsbeispiel, wie Figur 7 deutlich macht, nicht dazu ausgebildet, auf einen Boden 15 eines Behältnisses 11 aufgesetzt zu werden. Die Sauglanze 10 gemäß den Ausführungsbeispielen der Figuren 7 und 8 ist dazu ausgebildet, in ein Saugrohr 54 eingesetzt zu werden, das fest am Behältnis 11 angeordnet ist. Die Sauglanze 10 ist bei den Ausführungsbeispielen der Figuren 7 und 8 in Axialrichtung deutlich kürzer ausgebildet als bei den Ausführungsbeispielen der Figuren 1 bis 6.

Wiederum ist an der Sauglanze 10 bei den Ausführungsbeispielen der Figuren 7 und 8 ein Flowmeter 25 angeordnet, das über eine Signal- oder Steuerleitung 39d mit einer Steuereinheit 17 der Dosiereinrichtung 16 verbindbar ist. Der Flowmeter 25 ist so, wie bei den obigen Ausführungsbeispielen beschrieben, ausgebildet und ermöglicht eine Ermittlung einer Information über eine Förderung von Medium 12 durch die Sauglanze 10 hindurch.

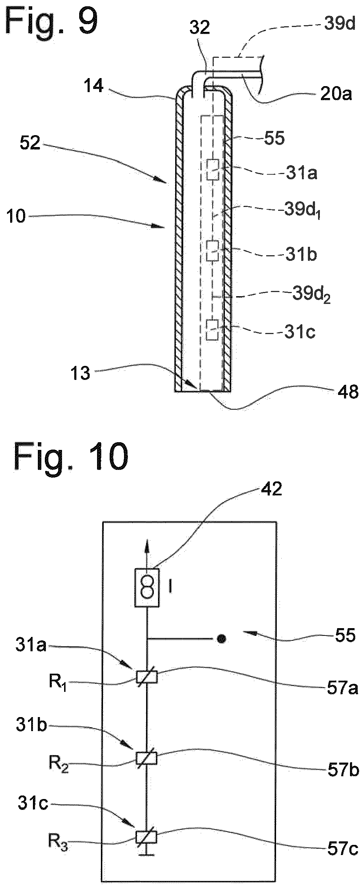

Unter Bezugnahme auf die Figuren 9 und 10 soll ein Ausführungsbeispiel erläutert werden, bei dem die Sauglanze 10 eine Mehrzahl von Bauelementen 31a, 31b, 31c mit Heizelementen 21 und Temperatursensoren 22 aufweist, wobei mittels einer einfach ausgebildeten Messschaltung 55 eine Bestimmung des Füllstandes 24 an Medium 12 im Behältnis 11 möglich wird.

Figur 9 zeigt eine Sauglanze 10 in Einzeldarstellung entsprechend der Darstellung in Figur 3. Es sind drei Baueinheiten 31a, 31b, 31c mit jeweils einem Heizelement 21, das in Figur 9 nicht dargestellt ist, und jeweils einem Temperatursensor 22, der in Figur 9 ebenfalls nicht dargestellt ist, angedeutet. Sämtliche Baueinheiten 31a, 31b, 31c sind Bestandteil einer in Figur 9 schematisch umrandeten Messschaltung 55. Die Messschaltung 55 wird in Figur 10 näher erläutert.

Zu der Messschaltung 55 gehört ausweislich Figur 10 eine Stromquelle 42 oder eine Spannungsversorgungsquelle und eine Vielzahl von temperaturabhängigen, in Reihe geschalteten Widerständen 57a, 57b, 57 c, die als R₁, R₂, R₃ bezeichnet sind.

Die Widerstände 57a, 57b, 57c sind temperaturabhängige, heizbare Widerstände, die auch als NTC- Bauelemente bzw. PTC-Bauelemente bezeichnet werden, oder solche Bauelemente umfassen können.

Die Stromquelle oder Spannungsversorgungsquelle 42 trägt nach Einschaltung auf die gesamte Widerstandskette der drei in Reihe geschalteten Widerstände 57a, 57b, 57c einen Strom auf. Aufgrund der ohmschen Wärme heizt sich jeder der drei Widerstände auf. Angemerkt sei, dass die Zahl der Widerstände und die Zahl der entsprechenden Baueinheiten 31a, 31b, 31 c selbstverständlich im Belieben des Fachmanns steht.

Abhängig davon, ob sich der jeweilige Widerstand 57a, 57b, 57c im Medium 12 befindet oder in Luft, wird von dem Widerstand R₁, R₂, R₃ unterschiedlich viel Wärme abgeführt. Dies hat zur Folge, dass ein von Medium umgebener Widerstand einen anderen Widerstandswert, zum Beispiel einen höheren Widerstandswert, aufweist als wenn sich der Widerstand nicht im Medium, sondern aufgrund eines gesunkenen Flüssigkeitsniveaus im Behältnis in Luft befindet.

Je nachdem, ob der Widerstand als PTC-Bauelement oder als NTC-Bauelement ausgebildet ist, kann an den sich im Medium befindlichen Widerständen eine höhere oder eine niedrigere Spannung abfallen, als an den in Luft befindlichen Widerständen.

Die Gesamtspannung U, die entlang der Widerstandskette aus den Widerständen R₁, R₂, R₃ insgesamt abfällt, entspricht m mal der Spannung an den sich in Luft befindlichen Widerstände, plus n mal der Spannung der sich in Medium befindlichen Widerstände.

Aus der ermittelten Spannung lässt sich dann zum Beispiel rechnerisch auf einfache Weise ermitteln, wie viele Widerstände sich noch im Medium befinden und wie viele Widerstände sich in Luft befinden. Damit ist der Füllstand 24 des Behältnisses 11 eindeutig entsprechend der Anzahl und der Positionen der einzelnen Widerstände aus der gemessenen Spannung ermittelbar.

## Patentansprüche

1. Sauglanze (10), insbesondere zur Entnahme eines flüssigen Mediums (12) aus einem Behältnis (11), umfassend einen Sauglanzenfußbereich (13), der insbesondere zum Aufsetzen auf einen Boden (15) des Behältnisses (11) ausgebildet ist, und einen Sauglanzenkopfbereich (14) zur Verbindung mit einer Dosiereinrichtung (16), **dadurch gekennzeichnet, dass** an der Sauglanze (10) wenigstens ein Heizelement (21) und wenigstens ein mit einer Messeinrichtung (23) verbindbarer oder verbundener Temperatursensor (22) angeordnet ist, wobei mittels der Messeinrichtung (23) unter Zuhilfenahme eines von dem Temperatursensor (22) ausgegebenen Messwertes
i) eine Information über eine vorgenommene Förderung des Mediums (12) durch die Sauglanze (10) hindurch ermittelbar ist und/ oder
ii) eine Information über einen Füllstand (24) an Medium (12) in dem Behältnis (11) ermittelbar ist.

2. Sauglanze (10) nach Anspruch 1, **dadurch gekennzeichnet, dass** die ermittelten Informationen an eine Steuereinheit (17) der Dosiereinrichtung (16) übermittelbar sind.

3. Sauglanze (10), insbesondere zur Entnahme eines flüssigen Mediums (12) aus einem Behältnis (11), umfassend einen Sauglanzenfußbereich (13), der insbesondere zum Aufsetzen auf einen Boden (15) des Behältnisses (11) ausgebildet ist, und einen Sauglanzenkopfbereich (14) zur Verbindung mit einer Dosiereinrichtung (16), **dadurch gekennzeichnet, dass** an der Sauglanze (10) wenigstens ein Flowmeter (25) angeordnet ist, mit dem eine Information über eine vorgenommene Förderung des Mediums (12) durch die Sauglanze (10) hindurch ermittelbar und insbesondere an eine Steuereinheit (17) der Dosiereinrichtung (16) übermittelbar ist.

4. Sauglanze nach Anspruch 3, **dadurch gekennzeichnet, dass** das Flowmeter (25) wenigstens ein Heizelement (21) und wenigstens einen mit einer Messeinrichtung (23) verbindbaren oder verbundenen Temperatursensor umfasst.

5. Sauglanze (10) nach Anspruch 1 oder nach Anspruch 4, **dadurch gekennzeichnet, dass** entlang einer axialen Erstreckung der Sauglanze (10) zwischen Sauglanzenfußbereich (13) und Sauglanzenkopfbereich (14) mehrere Heizelemente (21) und mehrere Temperatursensoren (22a, 22b) angeordnet sind.

6. Sauglanze nach Anspruch 1 oder nach Anspruch 4, **dadurch gekennzeichnet, dass** das Heizelement (21) und/oder der Temperatursensor (22) unmittelbar von dem Medium (12) beaufschlagbar ist.

7. Sauglanze nach Anspruch 1 oder nach Anspruch 4, **dadurch gekennzeichnet, dass** die Messeinrichtung (23) an der Sauglanze (10) angeordnet oder an der Dosiereinrichtung (16) angeordnet ist.

8. Sauglanze nach Anspruch 1 oder nach Anspruch 4, **dadurch gekennzeichnet, dass** das Heizelement (21) und/oder der Temperatursensor (22) innerhalb einer Hohlkammer (29) der Sauglanze angeordnet ist, wobei die Hohlkammer (29) insbesondere als Saugleitung (50) ausgebildet ist.

9. Sauglanze (10) nach Anspruch 8, **dadurch gekennzeichnet, dass** die Hohlkammer (29) von dem Medium (12) flutbar ist.

10. Sauglanze (10) nach Anspruch 1 oder nach Anspruch 4, **dadurch gekennzeichnet, dass** das Heizelement (21) und/oder der Temperatursensor (22) in oder an einer Wandung (30) der Sauglanze (10) oder an einer Wandung (45) einer Hohlkammer (29) der Sauglanze (10) angeordnet ist.

11. Sauglanze (10) nach Anspruch 1 oder nach Anspruch 4, **dadurch gekennzeichnet, dass** das Heizelement (21) und/oder der Temperatursensor (22) mit einer Steuerung (17) der Dosiereinrichtung (16) verbindbar ist.

12. Sauglanze (10) nach Anspruch 1 oder nach Anspruch 4, **dadurch gekennzeichnet, dass** das Heizelement (21) und der Temperatursensor (22) oder mehrere Temperatursensoren (22a, 22b) zu einer Baueinheit (31, 31a, 31b) zusammengefasst sind.

13. Sauglanze (10) nach Anspruch 12, **dadurch gekennzeichnet, dass** die Baueinheit (31, 31a, 31b) einen analogen Ausgang oder eine digitale Schnittstelle für einen Signalausgang aufweist.

14. System (36), umfassend eine Dosiereinrichtung (16) zur Dosierung von Medien (12), umfassend wenigstens ein Behältnis (11) zur Aufnahme eines Mediums (12), eine von einer Steuereinheit (17) der Dosiereinrichtung (16) ansprechbare Pumpe (18), und ein Zielgerät (19), wobei das Medium (12) unter Zuhilfenahme einer in das Behältnis (11) einsteckbaren und insbesondere auf einen Boden (15) des Behältnisses (11) aufsetzbaren Sauglanze (10) insbesondere einer Sauglanze nach einem der Ansprüche 1 bis 20, durch Betätigung der Pumpe (18) aus dem Behältnis (11) entnehmbar und dem Zielgerät (19) zuführbar ist, **dadurch gekennzeichnet, dass** an der Sauglanze (10), wenigstens ein Heizelement (21) und wenigstens ein mit einer Messeinrichtung (23) verbindbarer oder verbundener Temperatursensor (22) angeordnet ist, wobei mittels der Messeinrichtung (23) unter Zuhilfenahme eines von dem Temperatursensor (21) ausgegebenen Messwertes
i) eine Information über eine vorgenommene Förderung des Mediums (12) durch die Sauglanze (10) hindurch ermittelbar und an eine Steuereinheit (22) der Dosiereinrichtung (16) übermittelbar ist, und/ oder
ii) eine Information über einen Füllstand (24) an Medium (12) in dem Behältnis (11) ermittelbar und an eine Steuereinheit (17) der Dosiereinrichtung (16) übermittelbar ist.

15. Sauglanze (10) nach dem Oberbegriff des Anspruches 1, **dadurch gekennzeichnet, dass** die Sauglanze (10) eine Temperaturmesseinrichtung (46) aufweist, mit der eine Temperatur wenigstens eines Mediums (12) oder eine Temperatur einer Umgebung der Sauglanze (10) messbar ist, wobei eine Temperaturinformation über die gemessene Temperatur an die Steuereinheit (17) der Dosiereinrichtung (16) übermittelbar ist, und wobei die Steuereinheit (17) insbesondere dazu ausgebildet ist, die erhaltene Temperaturinformation bei Ansteuerung der Pumpe (18) zur Durchführung eines Dosierprozesses oder bei einer Kalibrierung der Pumpe (18) zu berücksichtigen.
